# EUROPEAN PATENT APPLICATION

(11) **EP 2 237 187 A2**
(43) Date of publication of application: **06.10.2010**
(21) Application number: 10156253.6
(22) Date of filing: 11.03.2010
(51) Int. Cl.: G06F 21/00

(54) **Information processing apparatus, authentication device, and recording medium**

(30) Priority: 31.03.2009 JP 2009087347
(71) Applicant: FUJITSU LIMITED, Kawasaki-shi, Kanagawa 211-8588 (JP)
(72) Inventor: Suzuki, Masato, Kawasaki-shi Kanagawa 211-8588 (JP)
(74) Representative: Wilding, Frances Ward

(57) **Abstract**

An information processing apparatus includes a first signing unit which digitally signs device information and environment information, a first generator which generates a first digital envelope as data including the signed device information and the signed environment information, a second signing unit which digitally signs biometric authentication information and the first digital envelope, a second generator which generates a second digital envelope as data including the signed biometric authentication information and the signed first digital envelope, a transmitter which transmits the second digital envelope, and a receiver which receives authentication results.

## Description

### CROSS-REFERENCE TO RELATED APPLICATIONS

This application is based upon and claims the benefit of priority of the prior Japanese Patent Application No. 2009-87347, filed on March 31, 2009, the entire contents of which are incorporated herein by reference.

### FIELD

Various embodiments described herein relate to an information processing apparatus for processing information, and an authentication device for authenticating the information processing apparatus.

### BACKGROUND

More and more on-line business transactions are performed via the Internet or the like. A sufficient level of security needs to be maintained in such an on-line business transaction. To assure security, public key infrastructure (PKI) authentication is performed besides identification through biometric authentication in the related art. A security determination method has been disclosed in Japanese Laid-open Patent Application No. 2004-157790. In the disclosed security determination method, the biometric authentication, the PKI authentication, and authentication based on environment information of an apparatus are combined.

### SUMMARY

An information processing apparatus includes a first signing unit which digitally signs device information and environment information, a first generator which generates a first digital envelope as data including the signed device information and the signed environment information, a second signing unit which digitally signs biometric authentication information and the first digital envelope, a second generator which generates a second digital envelope as data including the signed biometric authentication information, and the signed first digital envelope, a transmitter which transmits the second digital envelope, and a receiver which receives authentication results.

Additional objects and advantages of the various embodiments will be set forth in part in the description which follows, and in part will be obvious from the description, or may be learned by practice of the invention. The object and advantages of the various embodiments will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF DRAWINGS

Fig. 1 generally illustrates an authentication system including an information processing apparatus (computer) of a present embodiment and an authentication device (Web server) of a banking institution.
Fig. 2 illustrates a process of the computer.
Fig. 3 illustrates a process of a Web server.
Fig. 4 is a block diagram illustrating hardware elements of the computer.
Fig. 5 illustrates a data structure of a first digital envelope.
Fig. 6 illustrates a data structure of a second digital envelope.
Fig. 7 is a block diagram illustrating hardware elements of a Web server.
Fig. 8 illustrates a record layout of a user information database (DB).
Fig. 9 illustrates a record layout of a device DB.
Fig. 10 is a block diagram illustrating hardware elements of a DB server.
Fig. 11 illustrates a record layout of a software DB.
Figs. 12A to 12D are flowcharts illustrating a generation process of the second digital envelope.
Fig. 13 illustrates an image of a service screen.
Figs. 14A to 14D are flowcharts illustrating an authentication process of the Web server.
Figs. 15A to 15D are flowcharts of a digital envelope production process of a computer in accordance with a second embodiment.
Fig. 16 is a flowchart of an authentication process of a time stamp.
Fig. 17 is a block diagram of hardware elements of a computer in accordance with a third embodiment.
Fig. 18 is a block diagram of hardware elements of a computer in accordance with a fourth embodiment.
Fig. 19 is a block diagram of hardware elements of a Web server in accordance with the fourth embodiment.
Fig. 20 illustrates a record layout of a static evaluation table.
Fig. 21 illustrates a record layout of an overall evaluation table.
Figs. 22A and 22B are flowcharts of a final authentication process.

### DESCRIPTION OF EMBODIMENTS

### First Embodiment

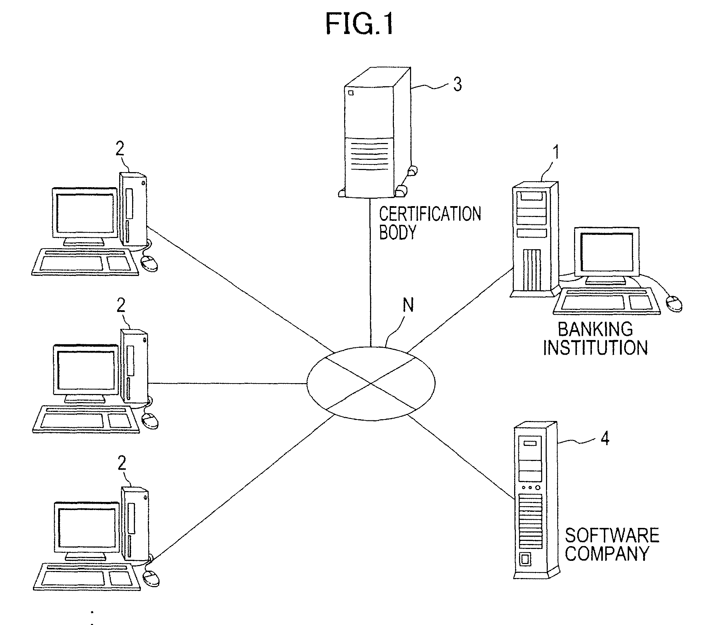

The various embodiments are described below with reference to the drawings. Fig. 1 generally illustrates an authentication system of a first embodiment. The authentication system includes an authentication apparatus (Web server) 1 of a banking institution, an information processing apparatus (computer) 2, a communication network N, a server computer (certificate authority (CA) server) 3 of a certification body, and a database server computer (DB server) 4 of a software company. In accordance with the first embodiment, the Web server 1 performs a variety of transaction processes including a money transfer, overseas remittance, foreign-currency deposit, application for investment, and balance inquiry in response to a request from the information processing apparatus 2. The operation of the authentication system is not limited to such on-line banking. For example, the authentication system may be used for authentication in on-line shopping, or an application for a particular banking institution. In the authentication system, another Web server connected to the Web server 1 performs the transaction processes including money transfer, overseas remittance, foreign-currency deposit, application for investment, and balance inquiry, and the Web server 1 performs an authentication process to be discussed below.

The computer 2 may be one of a personal computer, a cellular phone, a personal digital assistant (PDA), a mobile game machine, and a music player having a communication function. In the discussion that follows, the computer 2 is a desk-top personal computer or lap-top personal computer. The CA server 3 is a server computer as a certification body operated by VeriSign (Registered Trademark), Inc. or GlobalSign K.K. The DB server 4 manages environment information related to a use environment of the computer 2.

The environment information is information identifying software, middleware, or firmware applications running on the computer 2, or information identifying software or firmware applications running on a security chip 5. In the discussion that follows, the environment information is software information. More specifically, the environment information includes software information such as a name of an operating system (OS) stored on a storage 25 of the computer 2, a version of a patch to the OS, a name of a browser, a version of a patch to the browser, a name of a word processor, and a name of an anti-virus software program. The environment information further includes a name and a version of a control program stored on a control program memory 513 of the security chip 5. Each software program may be updated in version via a communication unit 26 or via a recording medium such as a CD-ROM (not illustrated). A new software program may also be installed. In accordance with the first embodiment, the name and the version of the OS of the computer 2, and the name and the version of the browser are handled as the software information.

The computer 2, the CA server 3, the Web server 1, and the DB server 4 are mutually connected to each other via a communication network N including the Internet and a cellular phone network and exchange a hypertext markup language (HTML) file and other information through hypertext transfer protocol (HTTP). If the Web server 1 authenticates the computer 2 in a transaction, the Web server 1 performs biometric authentication such as fingerprint, device authentication of the computer 2, and authentication of the software information.

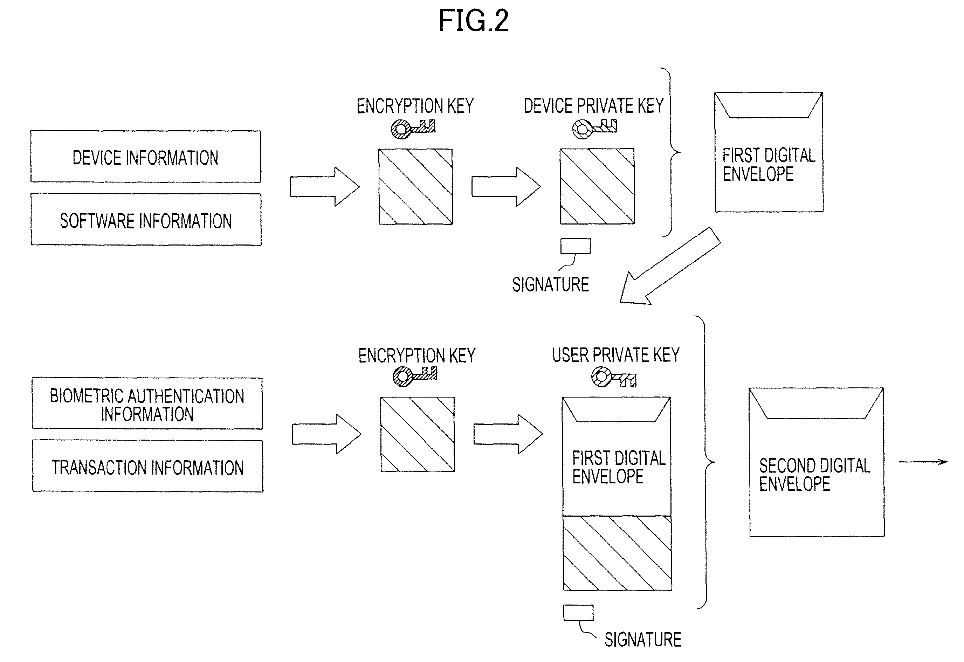

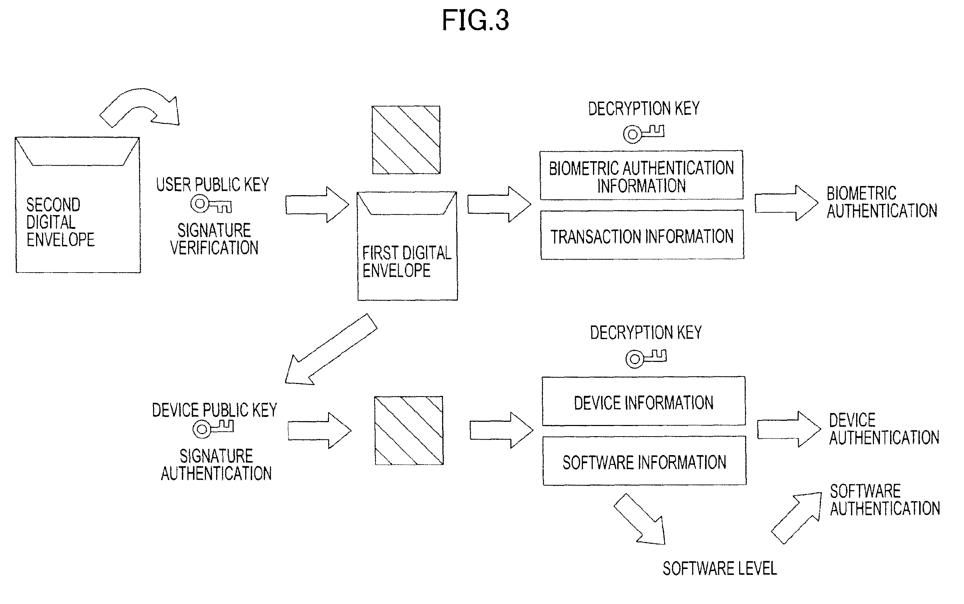

The processes will be generally described below. Fig. 2 illustrates a process of the computer 2. Fig. 3 illustrates a process of the Web server 1.

Referring to Fig. 2, the computer 2 encrypts the device information and software information thereof with an encryption key. The CA server 3 issues a first digital envelope (hereinafter referred to as a device digital certificate) certifying that the computer 2 is authorized. The computer 2 digitally signs the encrypted device information and the encrypted software information with a first private key (hereinafter referred to as a device private key) corresponding to a device public key within the device digital certificate. The encrypted device information and software information digitally encrypted are enclosed into the first digital envelope. The digital envelope is produced by adding, to a document structured in accordance with extended markup language (XML), information called an envelope, and then encloses these pieces of information into one file. The file is then handled as a package.

Biometric authentication information and transaction information are encrypted with the encryption key. The CA server 3 issues a second digital certificate (hereinafter referred to as a user digital certificate) certifying that an authentication subject (hereinafter referred to as a user) is authorized. The computer 2 digitally signs the first digital envelope, the encrypted biometric authentication information, and the encrypted transaction information using a second private key (hereinafter referred to as a user private key) corresponding to a user public key within the user digital certificate. The first digital envelop, the encrypted biometric authentication information, and the encrypted transaction information are digitally signed, and then enclosed into a second digital envelope. The second digital envelope is then transmitted to the Web server 1.

The process of the Web server 1 is described below with reference to Fig. 3. The Web server 1 extracts the user public key corresponding to the user private key from the user digital certificate. The Web server 1 signature verifies using the user public key the first digital envelop, the encrypted biometric authentication information, and the encrypted transaction information in the second digital envelope. If the signature verification has been successful, the Web server 1 decrypts the encrypted biometric authentication information, and the encrypted transaction information using a decryption key. The Web server 1 authenticates a biometric entity using the extracted biometric authentication information.

If the authentication of the biometric entity has been successful, the encrypted device information and the encrypted software information are extracted from the first digital envelope. The Web server 1 extracts the device public key corresponding to the device private key from the device digital certificate. The Web server 1 signature verifies the encrypted device information and the encrypted software information within the first digital envelop using the device public key. If the signature verification has been successful, the Web server 1 decrypts the encrypted device information and the encrypted software information using a decryption key. The Web server 1 authenticates the computer 2 in accordance with the decrypted device information.

If the computer 2 has been successfully authenticated, the Web server 1 transmits the software information to the DB server 4. In response to the software information, the DB server 4 determines a software level related to software security. If an OS having a high security level is installed, the software level is also high. The software level is transmitted to the Web server 1. The Web server 1 performs a software authentication in response to the software level. A transaction process is initiated on the basis of the transaction information on condition that authentication of the software as a final authentication step has been successful, i.e., that a series of authentication steps have been successful. In accordance with the first embodiment, the device information and the software information are encrypted with the encryption key as illustrated in Fig. 2. Optionally, the device information and the software information may not be encrypted.

The biometric authentication information and the transaction information are also encrypted with the encryption key. Optionally, the biometric authentication information and the transaction information may not be encrypted. In accordance with the first embodiment, the device information and the software information are encrypted, and the biometric authentication information and the transaction information are also encrypted. The transaction information is enclosed together with the biometric authentication information into the second digital envelope. Optionally, a set of three pieces of information, namely, the device information, the software information, and the transaction information may be enclosed in the first digital envelope.

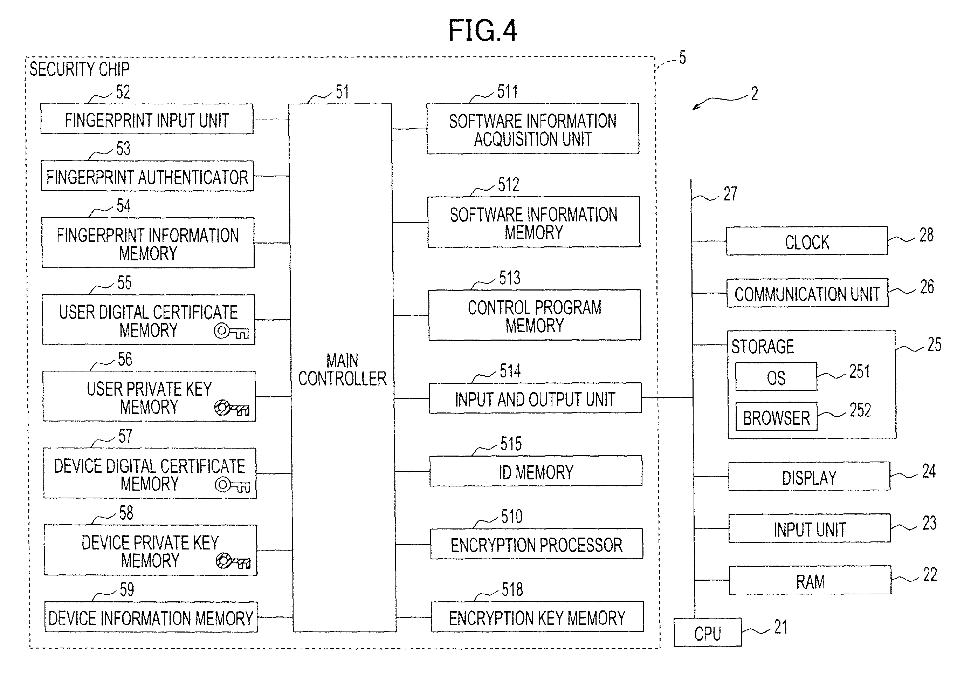

Fig. 4 is a block diagram illustrating hardware elements of the computer 2. The computer 2 includes security chip 5, central processing unit (CPU) 21 as a controller, random access memory (RAM) 22, input unit 23, display 24, storage 25, communication unit 26, clock 28, etc. The CPU 21 is connected to each hardware element of the computer 2 via a bus 27. The CPU 21 controls the elements of the computer 2 and performs a variety of software functions in accordance with a control program stored on the storage 25. The RAM 22 is a semiconductor memory and reads and writes thereon necessary information in response to an instruction from the CPU 21. The display 24 is a liquid-crystal display, an organic electro-luminescence (EL) display, or the like. The input unit 23 may be one of a keyboard, a mouse, and a touch panel laminated on the display 24. The communication unit 26 may be a wired or wireless LAN card or the like, and exchanges information with the Web server 1. The clock 28 outputs present time and date to the CPU 21.

The storage 25 may be a hard disk or a high-volume flash memory. The storage 25 stores the control program, OS 251, browser 252, a word processor application program, a mailer, and an anti-virus software program. In the discussion that follows, the storage 25 is a hard disk. The security chip (security device) 5 is an integrated circuit (IC) chip called trusted platform module (TPM) based on the specification of Trusted Computing Group (TCG). The security chip 5 is a security device supporting basic functions of security standardized by the TCG. With the security chip 5 mounted on (connected to) the computer 2, data is protected from a software attack or a physical attack. The security of the system is thus reinforced.

In order to reinforce security, the computer 2 includes the security chip 5 that performs a predetermined process independent of a process performed by the CPU 21. The security chip 5 is described in detail. The security chip 5 includes main controller 51, fingerprint input unit 52, fingerprint authenticator 53, fingerprint information memory 54, user digital certificate memory 55, user private key memory 56, device digital certificate memory 57, device private key memory 58, and device information memory 59. The security chip 5 further includes encryption processor 510, software information acquisition unit 511, software information memory 512, control program memory 513, input and output unit 514, and ID memory 515. The main controller 51 is connected each of these elements, and performs a variety of processes in accordance with a control program stored on the control program memory 513. The security chip 5 is connected to the CPU 21 as a main controller of the computer 2 via the input and output unit 514 as an interface and the bus 27. The main controller 51 exchanges information with the CPU 21 via the input and output unit 514.

When the computer 2 is started, the security chip 5 performs a biometric authentication process. On condition that the biometric authentication process has been successfully completed, the CPU 21 starts operating. The CPU 21 starts the OS 251. The biometric authentication may be fingerprint authentication, iris authentication, authentication based on a palm vein, voice authentication, or a combination thereof. In accordance with the first embodiment, the fingerprint authentication is used as described below. The fingerprint authentication is performed by the fingerprint input unit 52, the fingerprint authenticator 53, and the fingerprint information memory 54. The fingerprint input unit 52 receives the fingerprint information of a user. The fingerprint authenticator 53 storing a program for the fingerprint authentication executes the fingerprint authentication process. The fingerprint information memory 54 stores the fingerprint information serving as a basis for the fingerprint authentication. The fingerprint authentication is performed when the computer 2 is started up. Optionally, the fingerprint authentication may also be performed when the computer 2 exchanges information with the Web server 1 (during a transaction).

The fingerprint information memory 54 pre-stores the fingerprint information of the user. At the first registration of a fingerprint, the main controller 51 receives the fingerprint information of the user from the fingerprint input unit 52, and stores the received fingerprint information onto the fingerprint information memory 54. When the fingerprint information is stored on the fingerprint information memory 54, the main controller 51 determines whether a user ID and a password input by the input unit 23 match the user ID and the password unique to the user pre-stored on the ID memory 515. Only if the main controller 51 determines that the input user ID and password match the pre-stored user ID and password, the fingerprint information memory 54 stores the fingerprint information. It is noted that the ID memory 515 pre-stores the user ID and password input by the input unit 23 at the time of purchase of the computer 2.

A power switch (not illustrated) is turned on, and the main controller 51 receives the fingerprint information from the fingerprint input unit 52 for fingerprint authentication. The main controller 51 starts a fingerprint authentication program in the fingerprint authenticator 53 and determines whether the fingerprint information pre-stored on the fingerprint information memory 54 matches the received fingerprint information. Upon determining that the two pieces of fingerprint information match each other, the main controller 51 outputs to the CPU 21 the fingerprint authentication result that the fingerprint authentication has been successfully completed. In response to the output of the fingerprint authentication result that the fingerprint authentication has been successfully completed, the CPU 21 starts the OS 251.

The user digital certificate memory 55 stores the user digital certificate certifying the identification of the user and issued by the CA server 3. The user private key memory 56 stores the user private key paired with the user public key present in the user digital certificate. An issuing process of the user digital certificate is described below. The user inputs authentication identification information identifying the user, such as the user name, the user ID, the user e-mail address, or the like, and holder information including an utilization of the user digital certificate. The CPU 21 starts the browser 252, and accesses the CA server 3. The CPU 21 reads the user public key from the user digital certificate memory 55, and transmits to the CA server 3 the read user public key together with the holder information input by the input unit 23.

The CA server 3 performs an authentication process, and if no problems are found, the CA server 3 attaches a digital signature to the holder information and the user public key. The CA server 3 then generates the user digital certificate from the three pieces of information, i.e., the user public key, the holder information, and the digital signature in accordance with the specification of X.509. The CA server 3 transmits the generated user digital certificate to the computer 2. The CPU 21 in the computer 2 transfers the user digital certificate to the input and output unit 514. The main controller 51 stores the user digital certificate output from the input and output unit 514 onto the user digital certificate memory 55. The ID memory 515 stores the authentication identification information identifying the user, such as the user name, the user ID, the password, the nickname of the user, or the like.

The authentication identification information identifying the user may be stored onto the ID memory 515 at the purchase of the computer 2. For example, the user name, the user ID, and the password may be stored onto the ID memory 515 via the input unit 23 at the purchase of the computer 2. If the e-mail address and the nickname need to be registered later, such new information may be stored onto the ID memory 515 on condition that the user ID and password input at the time of purchase match the newly input user ID and password. A certificate ID uniquely attached to the user digital certificate may be used as the authentication identification information identifying the user. In accordance with the first embodiment, the user ID is used as the authentication identification information. The biometric authentication information to be encrypted may include the biometric authentication result in addition to the user ID. In accordance with the first embodiment, the biometric authentication information is the user ID and the biometric authentication result that the biometric authentication of the user has been successfully completed.

The device digital certificate memory 57 stores the device digital certificate pre-issued by the CA server 3. The device digital certificate includes a public key of the security chip 5 denoted by a blanked key symbol, device identification information identifying the computer 2, an expiration date of the device digital certificate, and a digital signature of the CA server 3. The device ID included in the device digital certificate may also include not only a serial number of the security chip 5, but also a serial number of the computer 2. The device digital certificate may be issued by the certification body to the manufacturer at the time of shipping of the security chip 5 or the computer 2. The device private key memory 58 stores the device private key (denoted by a hatched key symbol) paired with the public key stored on the device digital certificate memory 57. The device private key may also be stored onto the device private key memory 58 when one of the security chip 5 and the computer 2 is shipped.

The device information memory 59 stores device identification information (hereinafter referred to as a device ID) identifying the computer 2. The device ID may be the serial number of the computer 2, the serial number of the security chip 5, a media access control (MAC) address, a certificate ID uniquely attached to the device digital certificate, or the like. The device information may include, in addition to the device ID, the name of the manufacturer of the security chip 5 or the computer 2, a series name, a model name, etc. The device information such as the device ID may be a message digest that is calculated using a pre-stored hash function, in place of actual information.

After the computer 2 starts operating, the software information acquisition unit 511 acquires the software information prior to a stop of the operation of the computer 2, on a predetermined condition, or every predetermined period of time. More specifically, the main controller 51 acquires the name and the version of the OS 251 stored on the storage 25, and the name and the version of the browser 252 in accordance with the program stored on the software information acquisition unit 511. The main controller 51 then stores the acquired software information on the software information memory 512. In accordance with the first embodiment, the main controller 51 acquires the software information on the predetermined condition, i.e., in response to the start of the transaction in the on-line banking.

The transaction information is described below. The browser 252 of the computer 2 starts, accessing the Web server 1. To deposit money in the on-line banking, for example, information related to the transaction, such as an amount of deposit and a deposit account number, is input via the input unit 23. To purchase a financial product, transaction information such as the name of the financial product and a quantity of financial products, are input via the input unit 23. The CPU 21 outputs the input transaction information to the main controller 51 via the input and output unit 514.

Encryption, digital signing, and digital enveloping processes are described below. The main controller 51 reads the device information from the device information memory 59, and the software information from the software information memory 512. The main controller 51 reads the encryption key from the encryption key memory 518. The main controller 51 encrypts the device information and software information in accordance with the program stored on the encryption processor 510. Using the device private key stored on the device private key memory 58, the main controller 51 digitally signs the encrypted device information and the encrypted software information (in a digital signature process).

More specifically, the main controller 51 calculates the message digest of the encrypted device information and the encrypted software information in accordance with the hash function stored on the control program memory 513. The main controller 51 encrypts the calculated message digest with the device private key. The encrypted message digest becomes a digital signature. The main controller 51 then encloses the encrypted device information, the encrypted software information and the digital signature into a digital envelope, thereby producing a first digital envelope.

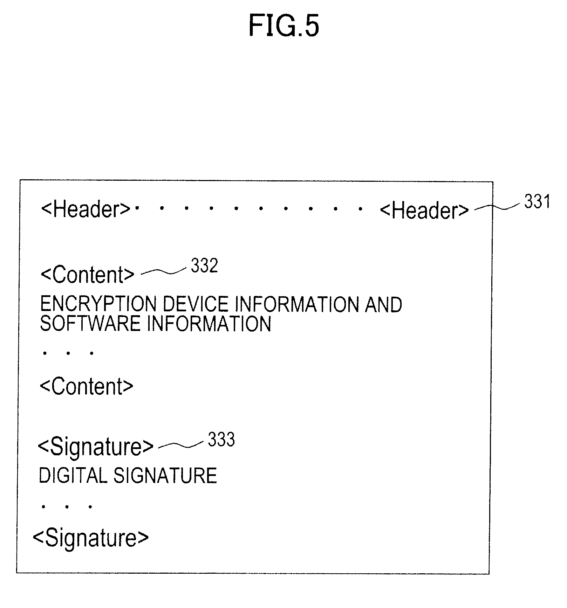

Fig. 5 illustrates a data structure of the first digital envelope. The first digital envelope includes, at least, a header section 331 becoming an envelope, a content section 332, and a digital signature section 333. Information indicating the first digital envelope and the like are described in the header section 331 enclosed by <Header> tags. The encrypted device information and the encrypted software information are described in the content section 332 enclosed by <Content> tags and having an XML structural sentence.

The digital signatures of the encrypted device information and the encrypted software information of the content section 332 are described in the digital signature section 333 enclosed by <Header> tags. In accordance with the control program stored on the control program memory 513, the main controller 51 reads a pre-stored template structural sentence and describes bibliographical information such as information representing the first digital envelope onto the header section 331. The main controller 51 also describes the encrypted device information and the encrypted software information onto the content section 332. Furthermore, using the device private key, the main controller 51 describes the digital signature of the content described on the content section 332, namely, the digital signature of the encrypted device information and the encrypted software information, and thereby generates the first digital envelope as a unitary body.

The generation of a second digital envelope is described below. The second digital envelope encloses therewithin the biometric authentication information and the transaction information, the first digital envelope, and the digital signatures of these pieces of information. Using the encryption key stored on the encryption key memory 518, the main controller 51 encrypts the biometric authentication information including the user ID stored on the ID memory 515 and the biometric authentication result, and the transaction information. Using the user private key stored on the user private key memory 56, the main controller 51 digitally signs the first digital envelope, and the encrypted biometric authentication information and the encrypted transaction information. The main controller 51 encloses the first digital envelope, the encrypted biometric authentication information, the encrypted transaction information, and the digital signatures thereof into a digital envelope, thereby generating the second digital envelope.

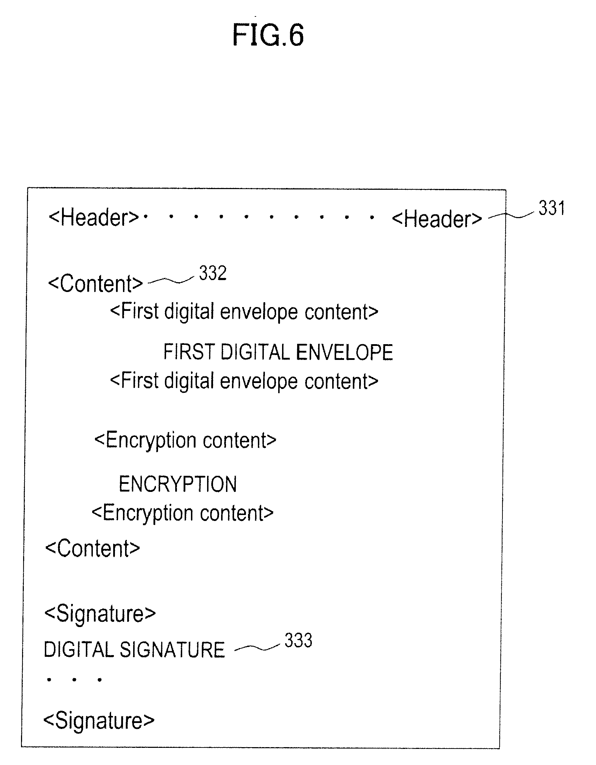

Fig. 6 illustrates a data structure of the second digital envelope. As the first digital envelope, the second digital envelope includes, at least, the header section 331 serving as an envelope, the content section 332, and the digital signature section 333. Information indicating the second digital envelope is described in the header section 331 enclosed by the <Header> tags. As hierarchically lower attributes, <First digital envelope content> tags and <Encryption content> tags are included in the content section 332 enclosed by the <Content> tags in the XML structural sentence. The first digital envelope illustrated in Fig. 5 is described between <First digital envelope content> tags. The encrypted biometric authentication information and the encrypted transaction information are included between <Encryption content> tags.

The digital signature of the first digital envelope of the content section 332, and the digital signatures of the encrypted biometric authentication information and the encrypted transaction information are described in the digital signature section 333 enclosed by the <Signature> tags. The main controller 51 reads a template structural sentence related to the pre-stored second digital envelope in accordance with the control program stored on the control program memory 513, and then describes on the header section 331 the bibliographical information indicating the second digital envelope. The main controller 51 describes the information of the first digital envelope between the <First digital envelope> tags of the content section 332, and describes the encrypted biometric authentication information and the encrypted transaction information between the <Encryption content> tags.

Using the user private key, the main controller 51 describes the content of the content section 332, i.e., the digital signatures of the first digital envelope, and the encrypted biometric authentication information and the encrypted transaction information, thereby generating the second digital envelope as a unitary body. The second digital envelope thus generated through the above-described process is transmitted to the Web server 1 via the input and output unit 514 and the communication unit 26.

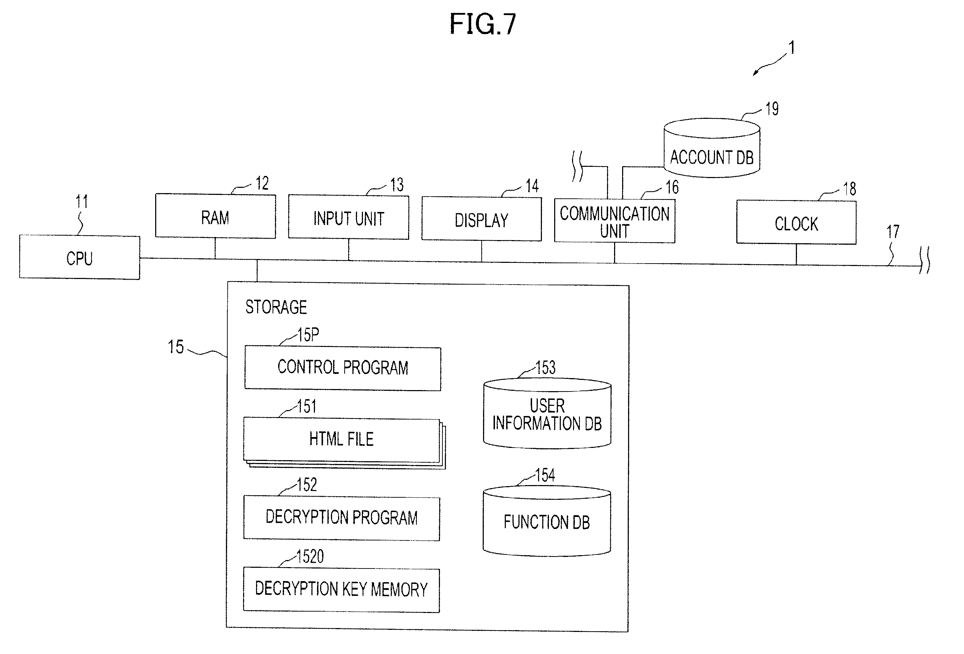

Fig. 7 is a block diagram illustrating hardware elements of the Web server 1. The Web server 1 includes CPU 11 as an authentication controller, random-access memory (RAM) 12, input unit 13, display 14, storage 15 serving as an authentication storage, communication unit 16, clock 18, etc. The CPU 11 is connected to other hardware elements of the Web server 1 via a bus 17 to control the hardware elements. The CPU 11 performs a variety of software functions in accordance with the control program 15P stored on the storage 15.

The RAM 12 is a semiconductor device, and reads and writes data thereon in response to an instruction from the CPU 11. The display 14 is a liquid-crystal display, for example, and the input unit 13 is a keyboard and a mouse, for example. The communication unit 16 is a gateway serving as a firewall. The communication unit 16 exchanges information with each of the computer 2, the CA server 3, the DB server 4, and the account database (DB) 19. The clock 18 outputs the present time and date information to the CPU 11. The storage 15 is a hard disk, for example, and stores control program 15P, HTML files 151, decryption program 152, decryption key memory 1520, user information database (DB) 153, and function database (DB) 154. It is not necessary that the user information database 153 be stored on the storage 15 in the Web server 1. As the account DB 19, the user information DB 153 may be stored on a DB server (not illustrated) connected via the communication unit 16 and read from and written onto the DB server as necessary.

The account DB 19 stores information related to a monetary transaction, such as an account number of an account and an amount outstanding on the account. The CPU 11 stores and searches for necessary information, using structured query language (SQL). The hypertext markup language (HTML) file 151 is data stored in an HTML format and related to screen pages on which a variety of processes are performed. Such pages include a top screen page, a registration screen page, an authentication screen page, a transfer screen page, a balance enquiry screen page, etc. It is perfectly acceptable that the Web server 1 mainly performs the authentication process, and that the transmission of a variety of types of information prior to the authentication and the monetary transaction subsequent to the authentication are performed by the Web server 1 in cooperation with another Web server (not illustrated).

The CPU 11 in the Web server 1 reads the HTML file 151 in response to a request from the computer 2, as appropriate, and then transmits the HTML file 151 to the computer 2 via the communication unit 16. The decryption program 152 is a program for decrypting encrypted information transmitted from the computer 2. The decryption key memory 1520 stores a decryption key corresponding to the encryption key stored on the encryption key memory 518 in the computer 2. It is noted that the hash function is stored on the storage 15.

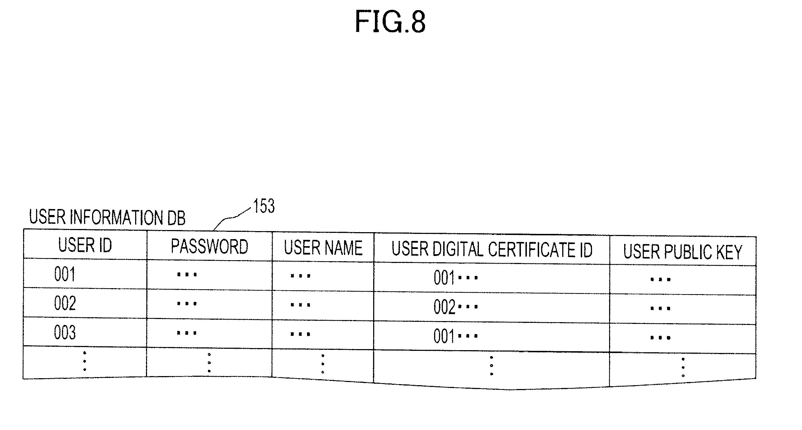

Fig. 8 illustrates a record layout of the user information DB 153. The user information DB 153 stores information regarding the user who performs a transaction. For example, the user information DB 153 stores the user ID, the user name, the user digital certificate ID, or the like as the authentication identification information. The user information DB 153 includes a user ID field, a password field, a user name field, a user digital certificate ID field, and a user public key field. The records in the user information DB 153 of the first embodiment are described for exemplary purposes only, and the present invention is not limited to these records. As long as a data relationship is maintained, the arrangement of data is set according to a flexible design.

The user ID field stores the user ID of the user who performs the transaction process using the computer 2. The password field stores a password corresponding to the user ID. The user name field stores the user name corresponding to the user ID. The user digital certificate ID field stores a user digital certificate ID uniquely identifying the user digital certificate of the computer 2. These pieces of information may be stored on the user information DB 153 at the initial registration in the on-line banking. The user public key field stores a user public key corresponding to a user private key. The user public key may be acquired beforehand, or may be acquired from within the user digital certificate transmitted from the computer 2 at each transaction.

The CPU 11 determines whether the user ID as the authentication identification information retrieved from the second digital envelope matches the user ID stored on the user information DB 153. If the two user IDs match each other, the CPU 11 determines that the authentication process has been successfully completed on the computer 2 by the registered user themselves, and determines that the registered user is performing the transaction. The CPU 11 then proceeds the next authentication process step.

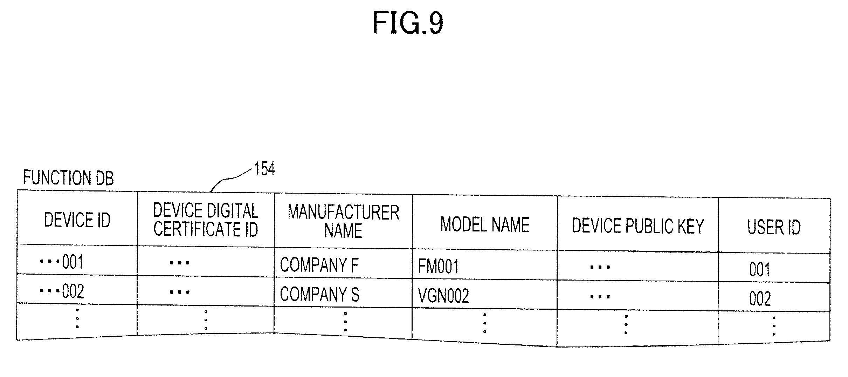

Fig. 9 illustrates a record layout of the function DB 154. The function DB 154 stores the device information of the computer 2 used in the transaction. The function DB 154 includes a device ID field, a device digital certificate ID field, a manufacturer name field, a model name field, a device public key field, and a user ID field. The device ID field stores a device ID unique to the device. The device digital certificate ID field stores an ID identifying the device digital certificate stored on the device digital certificate memory 57 on the computer 2. The manufacturer field stores a manufacturer name of the computer 2 mapped to the device ID. The model name field stores a model name of the computer 2 mapped to the device ID.

As previously described, the device ID, the device digital certificate ID, the manufacturer name, and the model name may be stored in value as message digests that are calculated in accordance with the hash function. As the user information, these values may be stored based on information transmitted from the computer 2 prior to the transaction. The device public key field stores a device public key corresponding to a device private key stored on the device private key memory 58 on the computer 2. The device public key may be acquired beforehand, or may be acquired from within the device digital certificate transmitted from the computer 2 at each transaction. The user ID field stores a user ID identifying the user who is using the computer 2. These pieces of information may be collected at the initial registration and stored on the function DB 154.

The CPU 11 extracts the device ID, the manufacturer name, and the model name as the device information in the first digital envelope. The CPU 11 determines whether the extracted ID matches the device ID stored on the function DB 154. If the two device IDs match each other, the CPU 11 determines that the request from the authorized computer 2 has been received, and then proceeds to the next authentication process step.

The CPU 11 transmits to the DB server 4 the software information, the manufacturer name, and the model name within the first digital envelope via the communication unit 16. The software environment of the computer 2 dynamically changes in response to software updating and a new installation of a software program, and the external DB server 4 evaluates security of the software. In response to the software information, the DB server 4 transmits to the Web server 1 a level indicative of security. The information to be transmitted to the DB server 4 may only be the software information. To increase accuracy further, the information of the manufacturer name and the model name may also be transmitted together to the DB server 4.

Collection of software related information and attaching the level to a software program are difficult for a banking institution alone as a trade partner to manage, and are thus performed by the DB server 4. It is perfectly acceptable that the banking institution itself may install the DB server 4. The DB server 4 may be operated by a third party other than the trade partner and in such a case, the software information, the manufacturer name, and the model name are simply transmitted to the DB server 4 in accordance with the first embodiment. Since no information identifying the user is transmitted, private information is sufficiently protected.

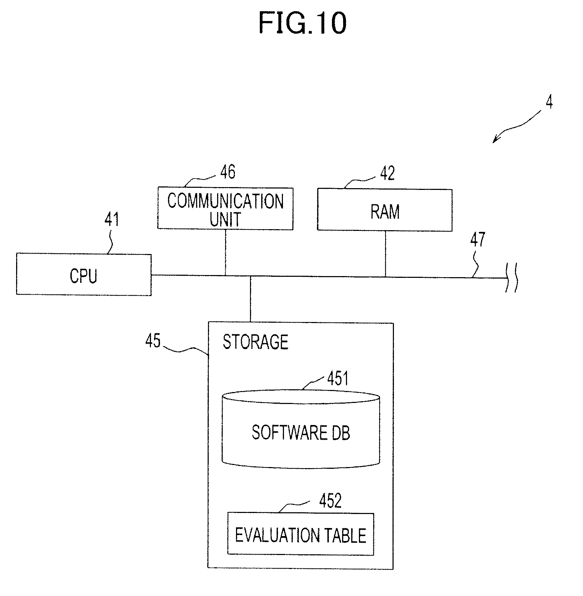

Fig. 10 is a block diagram illustrating hardware elements of the DB server 4. The DB server 4 includes CPU 41, RAM 42, storage 45, and communication unit 46. The CPU 41 is connected to other hardware elements of the DB server 4 via a bus 47, and controls the hardware elements. The CPU 41 performs a variety of software functions in accordance with a program stored on the storage 45. The RAM 42 is a semiconductor device, and reads and writes necessary data in response to an instruction from the CPU 41. The communication unit 46 is a gateway or the like serving as a firewall.

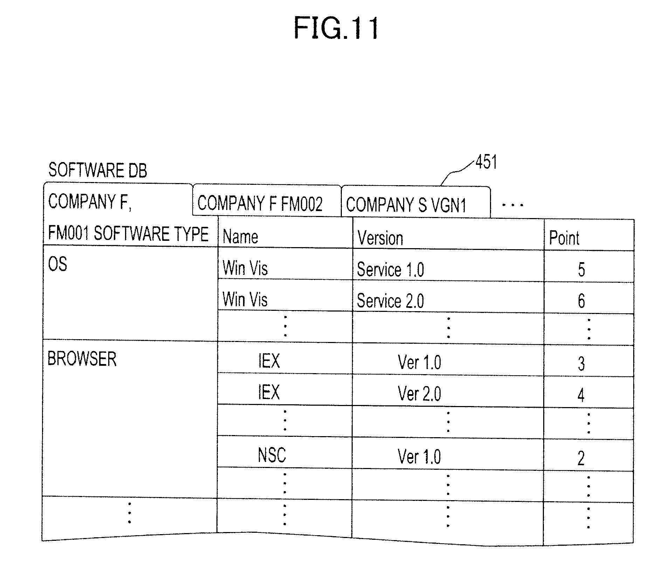

The storage 45 includes a software database (DB) 451 and an evaluation table 452. The software DB 451 stores a point indicative of the degree of security of each software program on a per manufacturer basis and on a model basis of the computer 2. Fig. 11 illustrates a record layout of the software DB 451. The software DB 451 stores the software information and point on a per manufacturer basis and on a per model basis of the computer 2. Fig. 11 illustrates the software information and points of model "FM001" of the company F.

The software DB 451 includes a software type field, a name field, a version field, and a point filed. The software type field stores a software program type, such as the OS 251, the browser 252, the anti-virus software program, the mailer, or the like. The name field stores a name of a software program belonging to the software type. For example, the name field stores the name of the OS 251, such as Windows Vista (Registered Trademark) of Microsoft, and the name of the browser 252 such as the Internet Explorer (Registered Trademark). The version field stores the version of each software program.

The administrator of the DB server 4 adds these pieces of information each time a software program is sold, or each time the version of the software program is updated. The point field stores a point representing the degree of security on a per version basis of each software program. As illustrated, the higher the point, the higher the software security. The CPU 11 searches the software DB 451 according to the software information, the manufacturer name, and the model name transmitted from the Web server 1 as a key, and extracts a point responsive to the version of the software program. The CPU 11 sums the extracted points of the software programs. For example, if the OS 251 is "Win Vis" with the version thereof being "Service2.0," and the browser 252 is "IEX" with the version thereof being "Ver1.0," the sum is 9 by adding point 3 to point 6.

The evaluation table 452 (Fig. 10) stores a level of security responsive to the sum. The level is rated on a scale of one to five, and the smaller the level value, the lower the security level. The CPU 11 reads the level responsive to the sum from the evaluation table 452, and transmits the read level to the Web server 1. If the level is equal to or higher than a predetermined value, for example, 4, the Web server 1 starts the transaction process based on the transaction information in the second digital envelope. The predetermined value is pre-stored on the storage 15. An appropriate value can be input via the input unit 13 in accordance with the security policy of the administrator of the on-line banking.

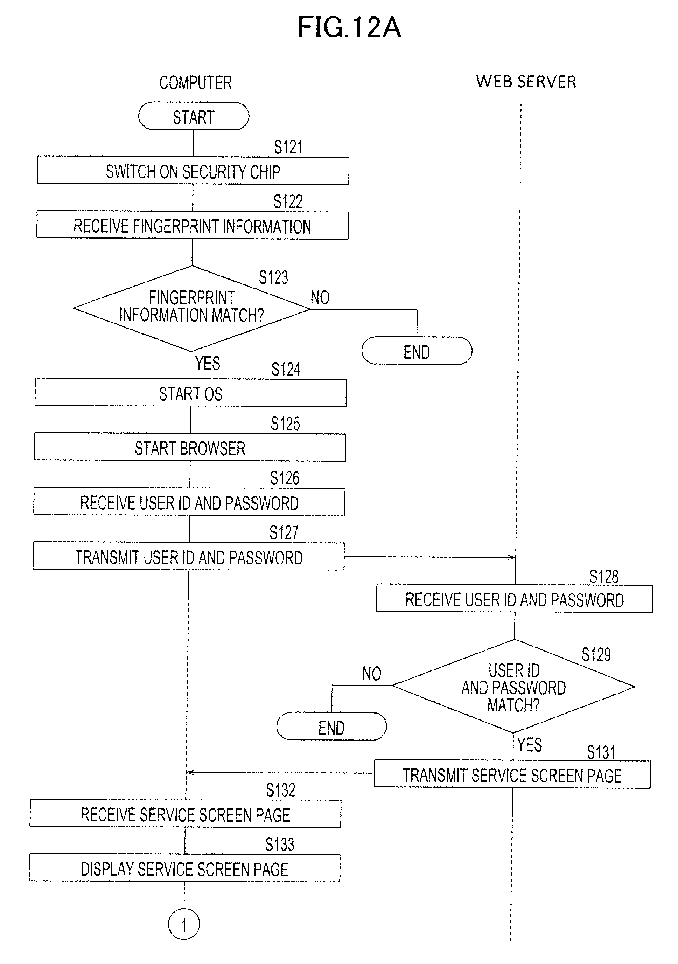

The authentication process of the above-described hardware structure is described with reference to flowcharts of Figs. 12A-12D. Figs. 12A-12D are the flowcharts of a generation process of the second digital envelope. The user using the on-line banking service operates a main switch (not illustrated) in the computer 2 to switch on the computer 2. The authentication process is performed on the premise that the above-described user registration, and the registration, storage, and application of each the device digital certificate, the encryption key, and the user digital certificate are completed.

Referring to Fig. 12A, the security chip 5 is switched on (step S121). The main controller 51 receives the fingerprint information from the fingerprint input unit 52 (step S122).

The main controller 51 determines whether the received fingerprint information matches the fingerprint information pre-stored on the fingerprint information memory 54 (step S123). If it is determined in step S123 that the two pieces of fingerprint information fail to match (no in step S123), the main controller 51 ends the process by determining that the access is from a different user. If it is determined that the two pieces of fingerprint information match each other (yes in step S123), the main controller 51 outputs to the CPU 21 a signal indicative of a start permit via the input and output unit 514. The CPU 21 starts the OS 251 (step S124).

In response to an instruction from the input unit 23, the CPU 21 starts the browser 252 (step S125), and accesses the Web server 1. The top screen page of the on-line banking is displayed on the browser 252 of the display 24. The user inputs the user ID and password to log in the on-line service. The CPU 21 receives the user ID and password input via the input unit 23 (step S126), and then transmits the input user ID and password to the Web server 1 (step S127). The CPU 11 in the Web server 1 receives the transmitted user ID and password (step S128).

The CPU 11 determines whether the received user ID and password match the user ID and password stored on the user information DB 153 (step S129). If it is determined that the received user ID and password fail to match the user ID and password stored on the user information DB 153 (no in step S129), the CPU 11 determines that the access is an unauthorized one and ends the process. If it is determined that the received user ID and password match the user ID and password stored on the user information DB 153 (yes in step S129), the CPU 11 transmits the service screen page in the HTML file 151 to the computer 2 (step S131). The computer 2 receives the service screen page (step S132), and the CPU 21 displays the received service screen page on the browser 252 (step S133).

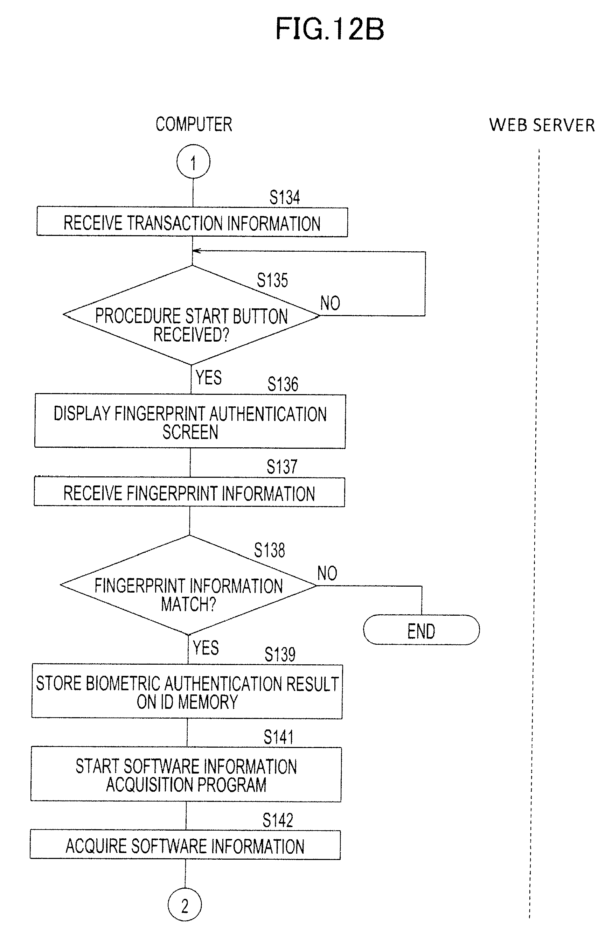

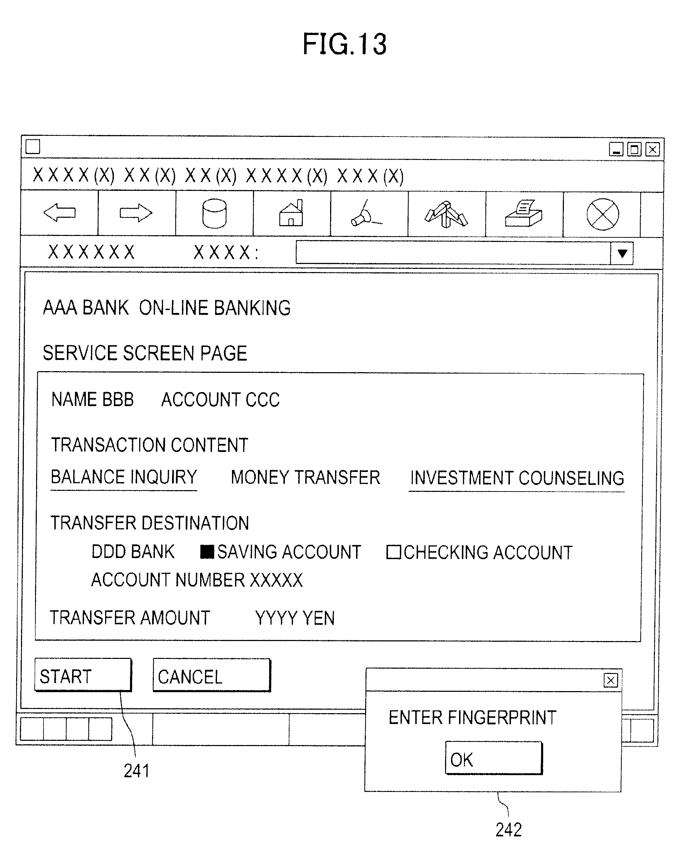

Fig. 13 illustrates the service screen page. The transaction content includes balance inquiry, transfer, investment advisory service, etc. Referring to Fig. 13, the transfer process is in progress. The transaction information is input via the input unit 23. As illustrated in Fig. 13, information indicating that the transfer process is to be performed, the account number of a transfer destination, a transfer amount, etc. have been input as the transaction information. Referring to Fig. 12B, the CPU 21 receives the transaction information input via the input unit 23 (step S134). The CPU 21 then determines whether a selection input responsive to the pressing of a procedure start button 241 has been received from the input unit 23 (step S135). The pressing of the procedure start button 241 means a start of a procedure and authentication process.

If the CPU 21 determines that the selection input of the procedure start button 241 has not been received (no in step S135), the CPU 21 waits on standby for the reception of the selection input. If the CPU 21 determines the selection input has been received (yes in step S135), the CPU 21 outputs the transaction information received in step S134 to the main controller 51 via the input and output unit 514. In response to the reception of the transaction information as a trigger, the main controller 51 starts the control program stored on the control program memory 513 and outputs information requesting the fingerprint authentication to the CPU 21 via the input and output unit 514.

Upon receiving the fingerprint authentication request information, the CPU 21 displays a screen page 242 prompting the user to input a fingerprint in a popup display as illustrated in Fig. 13 (step S136). In addition to the reception of the fingerprint information in step S122, the input of the fingerprint information may be requested again in this way. This process step prevents spoofing between the first fingerprint authentication and the input of the transaction information. The input of the fingerprint of the user themselves immediately after the input of the transaction information means that the transaction is based on the user's own approval. The user's own will on the transaction is thus solidly guaranteed. Returning to Fig. 12B, the main controller 51 receives the fingerprint information input via the fingerprint input unit 52 (step S137). The main controller 51 determines whether the received fingerprint information matches the fingerprint information pre-stored on the fingerprint information memory 54 (step S138).

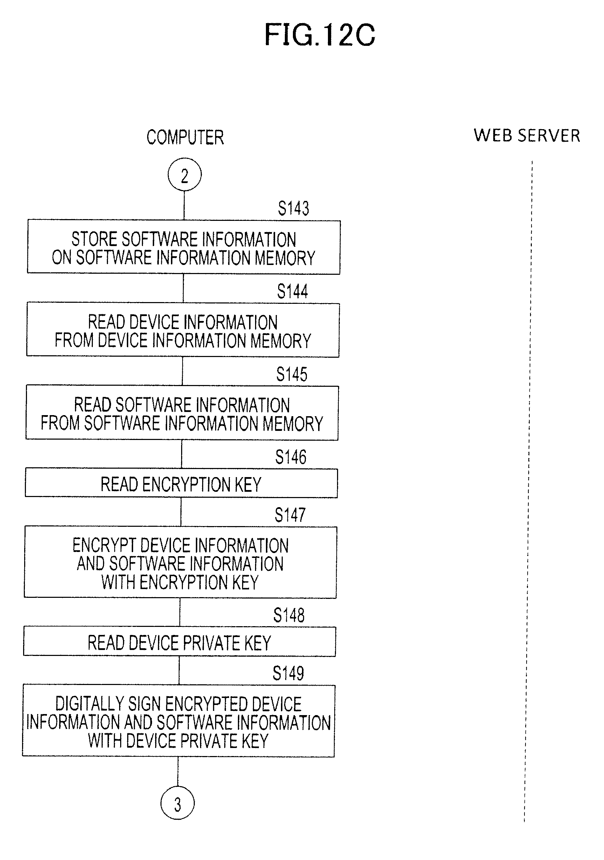

If it is determined that the two pieces of fingerprint information fail to match each other (no in step S138), the main controller 51 determines that the access is originated from a different user and ends the process. On the other hand, if it is determined the two pieces of fingerprint information match each other (yes in step S138), the main controller 51 stores on the ID memory 515 the biometric authentication result that the biometric authentication has been successfully completed (step S139). The main controller 51 starts a software information acquisition program stored on the software information acquisition unit 511 (step S141), and acquires the software information (step S142). More specifically, the main controller 51 acquires the name and version of the OS 251, and the name and version of the browser 252 by reading these pieces of information from the storage 25, a registry, or the like. Referring to Fig. 12C, the CPU 21 stores the acquired software information onto the software information memory 512 (step S143).

The main controller 51 reads from the device information memory 59 the device information including the device ID, the manufacturer name, and the model name (step S144). The main controller 51 reads the software information from the software information memory 512 (step S145). The main controller 51 reads the encryption key from the encryption key memory 518 (step S146). Using the encryption key, the main controller 51 encrypts the device information and the software information (step S147). The main controller 51 reads the device private key (step S148).

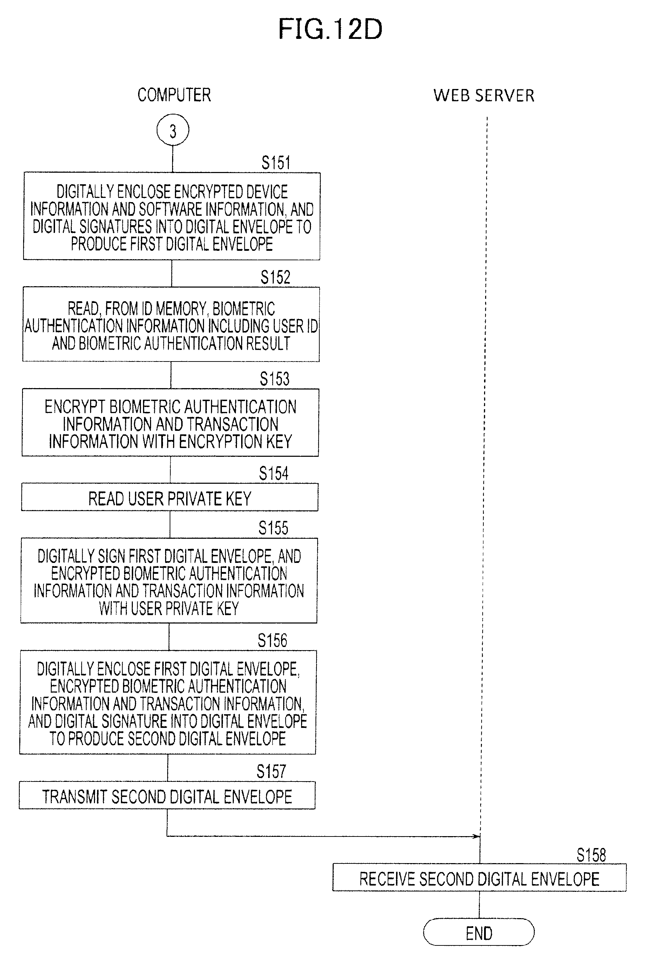

The main controller 51 digitally signs the encrypted device information and the encrypted software information with the device private key (step S149). Referring to Fig. 12D, the main controller 51 encloses the encrypted device information and the encrypted software information and the digital signatures into a digital envelop, thereby generating the first digital envelope (step S151). The main controller 51 reads, from the ID memory 515, the biometric authentication information including the user ID and the biometric authentication result stored in step S139 (step S152). Subsequent to the reading step, the main controller 51 deletes the information related to the biometric authentication result on the ID memory 515.

The main controller 51 encrypts the transaction information received in step S134 and the biometric authentication information with the encryption key (step S153). In the above discussion, the encryption key in step S153 and the encryption key in step S147 are identical to each other. Alternatively, the encryption key in step S153 may be different the encryption key in step S147. The main controller 51 reads the user private key from the user private key memory 56 (step S154). The main controller 51 digitally signs the first digital envelope, and the encrypted biometric authentication information and transaction information with the user private key (step S155). More specifically, the message digest of each of the first digital envelope and the encrypted biometric authentication information and transaction information is calculated and then encrypted with the user private key to generate a digital signature.

The main controller 51 encloses the first digital envelope, the encrypted biometric authentication information and transaction information, and the digital signature in step S155 into an digital envelope, thereby generating the second digital envelope (step S156). The main controller 51 transmits the second digital envelope to the Web server 1 via the input and output unit 514 and the communication unit 26 (step S157). When the second digital envelope is transmitted, the device digital certificate and the user digital certificate may be enclosed in the second digital envelope. The CPU 11 receives the second digital envelope via the communication unit 16 (step S158).

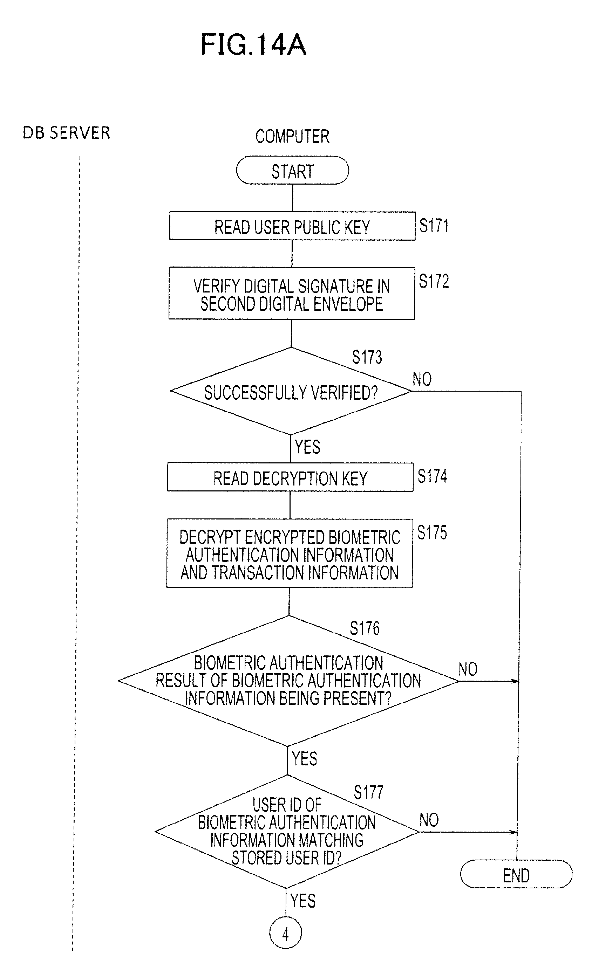

Figs. 14A-14D are flowcharts of the authentication process of the Web server 1. The CPU 11 in the Web server 1 reads from the user information DB 153 the user public key corresponding to the user ID (step S171). Optionally, the CPU 11 may extract the device public key and the user public key respectively from the device digital certificate and the user digital certificate transmitted together with the second digital envelope. The CPU 11 verifies the digital signature in the received second digital envelope (step S172). More specifically, the CPU 11 calculates the message digest of each of the first digital envelope and the encrypted biometric authentication information and transaction information in the second digital envelope, using the hash function stored on the storage 15. The CPU 11 acquires the message digest by decrypting the digital signature with the user public key. If the message digest matches the calculated message digest, the digital signature is free from falsification and verified successfully. If the message digest fails to match the calculated message digest, there is a possibility of falsification, and the digital signature is not verified.

The CPU 11 determines whether the verification has been successfully completed (step S173). If the digital signature has not been verified (no in step S173), the CPU 11 ends the process. If the digital signature has been successfully verified (yes in step S173), the CPU 11 reads a decryption key from the decryption key memory 1520 (step S174). The CPU 11 starts the decryption program 152, and then decrypts the encrypted biometric authentication information and transaction information (step S175). The CPU 11 determines whether the biometric authentication result indicating the success of the biometric authentication is present in the decrypted biometric authentication information (step S176). If it is determined that the biometric authentication result indicating the success of the biometric authentication is not present in the decrypted biometric authentication information (no in step S176), the CPU 11 determines that the biometric authentication has not been completed or that the biometric authentication has not been successfully completed, and then ends the process.

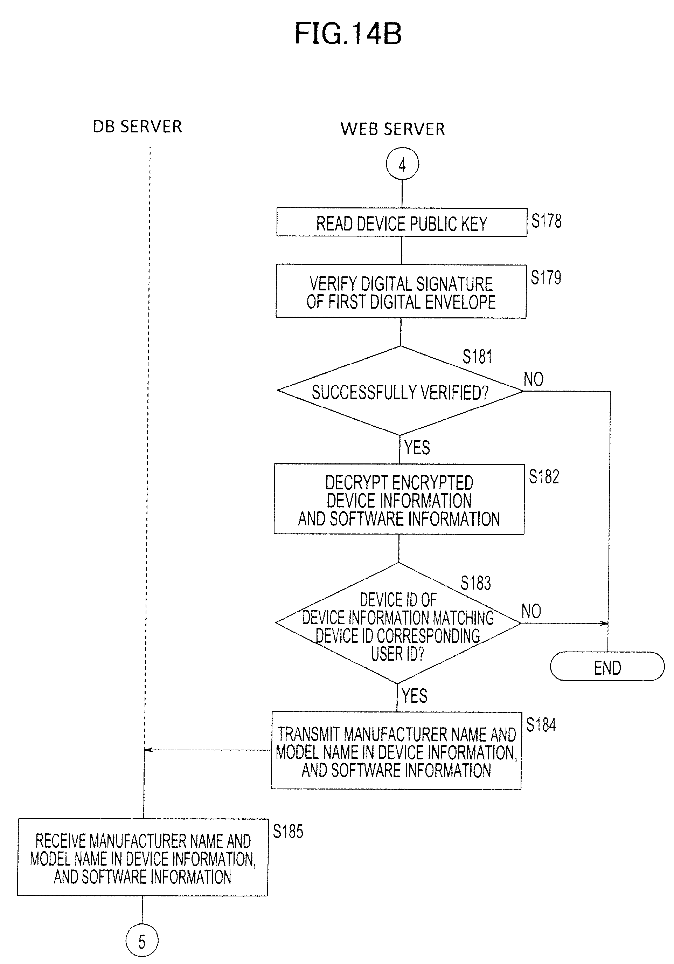

If it is determined that the biometric authentication result indicating the success of the biometric authentication is present in the decrypted biometric authentication information (yes in step S176), the CPU 11 determines whether the user ID in the biometric authentication information matches the user ID corresponding to the user public key stored on the user information DB 153 (step S177). If the two user IDs fail to match each other (no in step S177), the CPU 11 ends the process. Referring to Fig. 14B, if it is determined that the two user IDs match each other (yes in step S177), the CPU 11 reads from the function DB 154 the device public key corresponding to the user ID (step S178).

The CPU 11 verifies the digital signature in the first digital envelope (step S179). More specifically, in the same manner as in step S173, the CPU 11 verifies the digital signature applied to the encrypted device information and software information in the first digital envelope. The CPU 11 determines whether the digital signature has been successfully verified (step S181). If it is determined that the verification of the digital signature fails (no in step S181), the CPU 11 determines that a falsification has been performed and then ends the process. If it is determined that the digital signature has been successfully verified (yes in step S181), the CPU 11 decrypts the encrypted device information and software information with the decryption key (step S182).

The CPU 11 determines whether the device ID in the device information resulting from the decryption matches the device ID corresponding to the device public key and the user ID stored on the function DB 154 (step S183). If it is determined that the two device IDs fail to match each other (no in step S183), the CPU 11 ends the process. If it is determined that the two device IDs match each other (yes in step S183), the CPU 11 transmits to the DB server 4 the manufacturer name and the model name in the device information, and the software information (step S184).

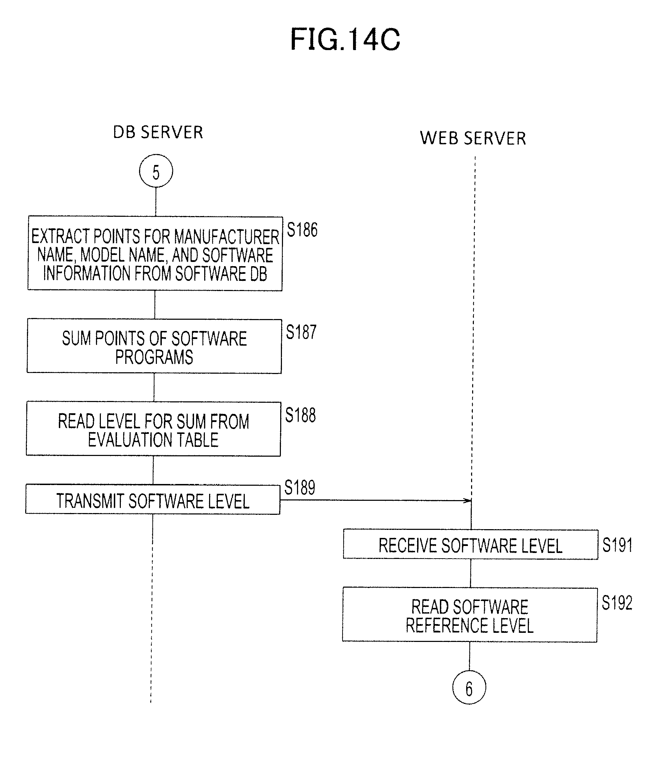

The CPU 41 in the DB server 4 receives the manufacturer name and the model name in the device information, and the software information transmitted via the communication unit 46 (step S185). Referring to Fig. 14C, the CPU 41 extracts from the storage 45 the points responsive to the manufacturer name and the model name in the device information, and the software information (step S186). The CPU 41 sums the points of the software programs (step S187). The CPU 41 reads from the evaluation table 452 the level responsive to the sum (step S188). The calculation process of the level has been described for exemplary purposes only. Weights may be modified in accordance with a software program. For example, the point of the OS 251 is multiplied by a weight coefficient of 1.5, and the point of the browser 252 is multiplied by a weight coefficient of 1.1. In the discussion that follows, the level of software related to security is referred to as a software level.

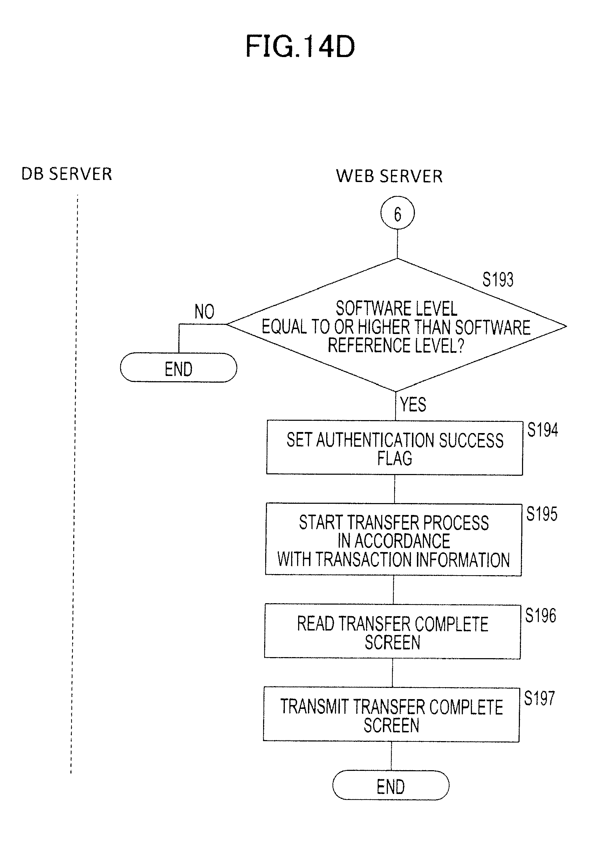

The CPU 41 transmits the read software level to the Web server 1 (step S189). The CPU 11 in the Web server 1 receives the software level (step S191). The CPU 11 reads a software reference level from the storage 15 (step S192). Referring to Fig. 14D, the CPU 11 determines whether the software level is equal to or higher than the software reference level (step S193). If it is determined that the software level is lower than the software reference level (no in step S193), the CPU 11 determines the software security is low, and ends the process.

If it is determined that the software level is higher than the software reference level (yes in step S193), the CPU 11 stores on the storage 15 a flag indicating an authentication success (step S194). In response to the transaction information decrypted in step S175, the CPU 11 starts the transfer process to the account DB 19 (step S195). The CPU 11 reads a transfer complete screen page from the HTML file 151 (step S196), and then transmits the transfer complete screen page to the computer 2 (step S197). The authentication process is performed on the private information such as device ID identifying the computer 2 on condition that no falsification has been found, and that the transaction entity has been successfully authenticated. The privacy of the user is thus protected. A third party, other than the trade partner, is notified of only the software information unrelated to the private information. A leakage problem of the private information is thus unlikely.

### Second Embodiment

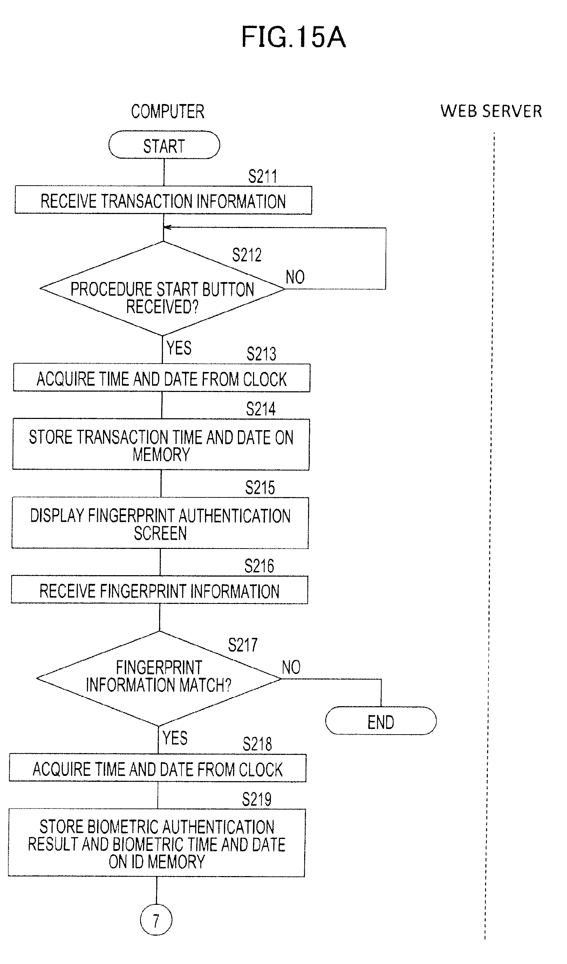

A second embodiment relates to an application of a time stamp. A time stamp server attaching a time stamp may be separately used. For convenience of explanation, the CA server 3 has a function of a time stamp server in accordance with the second embodiment. In accordance with the second embodiment, a time stamp token (time certificate information with a digital signature attached thereto) is not merely attached to a second digital envelope, but attached to the second digital envelope on condition that the four operations, namely, the biometric authentication, the reading of the device information, the collection of the software information, and the transaction are completed within a predetermined period of time, for example, several seconds. The time stamp process is described in detail below with flowcharts of Fig. 15A-15D.

Figs. 15A-15D are the flowcharts of the digital enveloping process of the computer 2 in accordance with the second embodiment. Step S133 of Fig. 12A described with reference to the first embodiment is followed by the process described below. Referring to Fig. 15A, the CPU 21 in the computer 2 receives the transaction information input via the input unit 23 (step S211). The CPU 21 determines whether the selection input of the procedure start button 241 starting the authentication process has been received from the input unit 23 (step S212).

If the selection input of the procedure start button 241 has not been received (no in step S212), the CPU 21 waits on standby for the selection input. If it is determined that the selection input has been received (yes in step S212), the CPU 21 references the output from the clock 28 and acquires time and date (step S213). The time and date acquired in step S213 is hereinafter referred to as transaction time and date. The CPU 21 outputs the transaction information received in step S211 and the acquired transaction time and date to the main controller 51 via the input and output unit 514. In response to the reception of the transaction information as a trigger, the main controller 51 starts the control program stored on the control program memory 513. Upon determining that the selection input of the procedure start button 241 has been received, the main controller 51 acquires time data output from the clock 28 or a clock (not illustrated) within the security chip 5. The main controller 51 stores the received transaction time and date onto an internal memory (step S214).

The main controller 51 outputs information requesting the fingerprint authentication to the CPU 21 via the input and output unit 514. Upon receiving the fingerprint authentication request information, the CPU 21 displays a screen page 242 prompting the user to input the fingerprint as illustrated in Fig. 13 (step S215). The main controller 51 receives the input fingerprint information from the fingerprint input unit 52 (step S216). The main controller 51 determines whether the received fingerprint information matches the fingerprint information pre-stored on the fingerprint information memory 54 (step S217). In accordance with the second embodiment, the start of the transaction is followed by the biometric authentication, the collection of the software information, and the reading of the device information in that order. The present invention is not limited to this order.

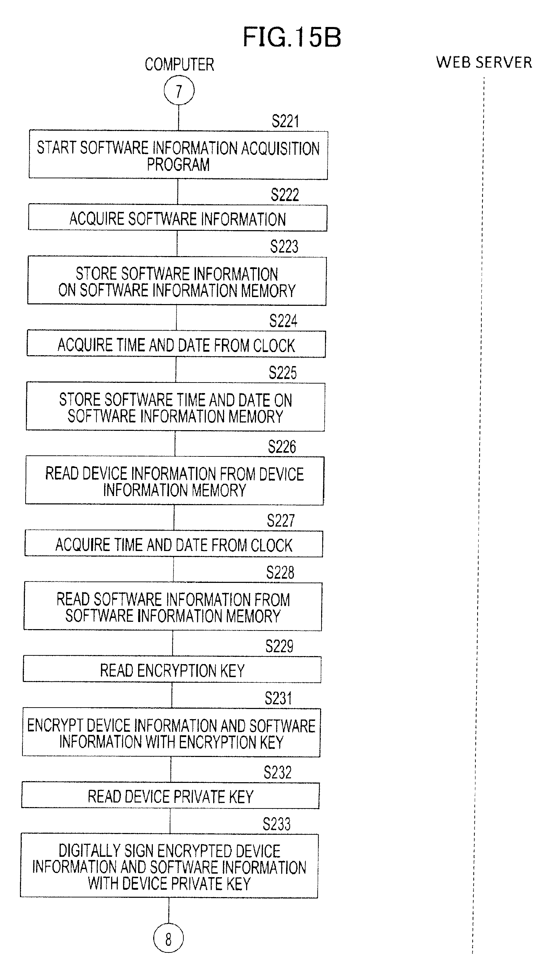

If the two pieces of fingerprint information fail to match each other (no in step S217), the main controller 51 determines that the accessing is from a different user. If the two pieces of fingerprint information matches each other (yes in step S217), the main controller 51 references the output from the clock 28 to acquire time and date (step S218). The time and date acquired in step S218 are hereinafter referred to as biometric time and date. The main controller 51 stores on the ID memory 515 the biometric authentication result indicating that the biometric authentication has been successfully completed and the biometric time and date (step S219). Referring to Fig. 15B, the main controller 51 starts a software information acquisition program stored on the software information acquisition unit 511 (step S221), and acquires the software information (step S222). The CPU 21 stores the acquired software information onto the software information memory 512 (step S223).

The main controller 51 references the output of the clock 28 and acquires time and date (step S224). The time and date acquired in step S224 are hereinafter referred to as software time and date. The main controller 51 stores the acquired software time and date onto the software information memory 512 (step S225). The main controller 51 reads from the device information memory 59 the device information including the device ID, the manufacturer name, and the model name (step S226). The main controller 51 references the output of the clock 28 and acquires time and date (step S227). The time and date acquired in step S227 are hereinafter referred to as device time and date. The main controller 51 stores the acquired device time and date onto the internal memory thereof.

The main controller 51 reads the software information from the software information memory 512 (step S228). The main controller 51 reads the encryption key from the encryption key memory 518 (step S229). The main controller 51 encrypts the device information and the software information with the encryption key (step S231). The main controller 51 reads a device private key from the device private key memory 58 (step S232).

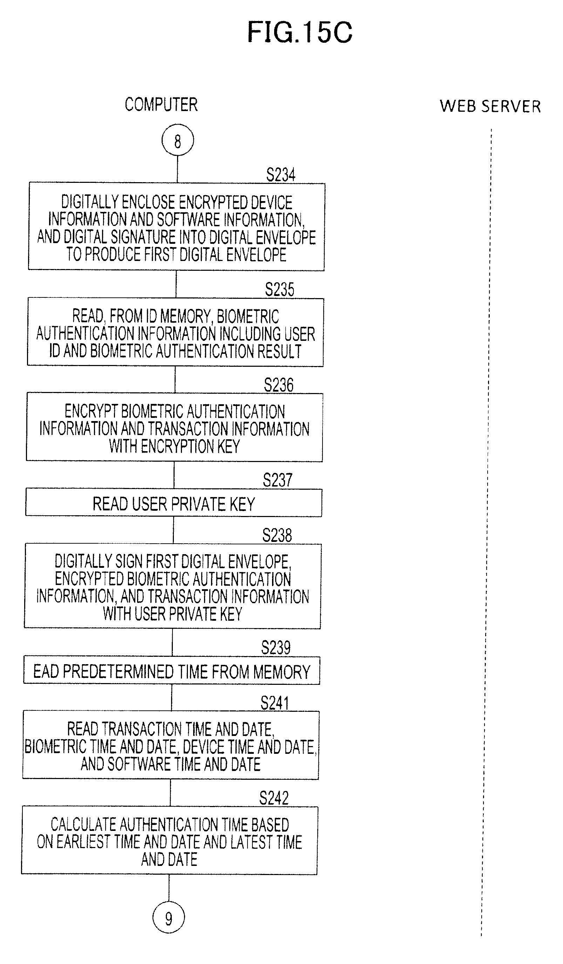

The main controller 51 digitally signs the encrypted device information and software information with the device private key (step S233). Referring to Fig. 15C, the main controller 51 encloses the encrypted device information and software information and the digital signature into a digital envelope to generate the first digital envelope (step S234). The main controller 51 reads from the ID memory 515 the biometric authentication information including the user ID and the biometric authentication result stored in step S219 (step S235). Subsequent to the reading operation, the main controller 51 deletes the information related to the biometric authentication result stored on the ID memory 515.

The main controller 51 encrypts the transaction information received in step S211 and the biometric authentication information with the encryption key (step S236). The main controller 51 reads the user private key from the user private key memory 56 (step S237). The main controller 51 then digitally signs the first digital envelope and the encrypted biometric authentication information and transaction information with the user private key (step S238). The main controller 51 reads a predetermined time stored on the internal memory thereof (step S239). The main controller 51 reads the acquired transaction time and date, biometric time and date, device time and date, and software time and date (step S241).

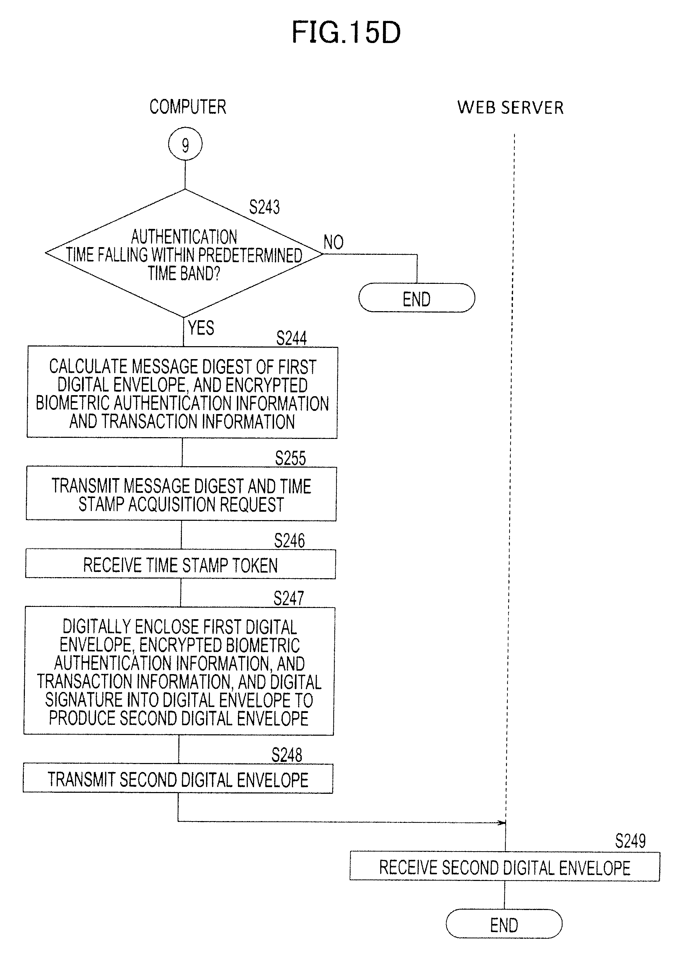

The main controller 51 extracts the earliest time and date and the latest time and date from the read times and dates, and then calculates an authentication time needed for the authentication based on differences of times and dates (step S242). The predetermined time may be 10 seconds, for example, and may be increased or decreased based on security policy. Referring to Fig. 15D, the main controller 51 determines whether the authentication time is within the predetermined time band (step S243). If the authentication time is not within the predetermined time band (no in step S243), for example, if one hour has elapsed since the start of the transaction, the security level is lowered. The main controller 51 ends the process. In this way, the risk of spoofing is lowered.

If the authentication time is within the predetermined time band (yes in step S243), the main controller 51 calculates the message digest of each of the first digital envelope, and the encrypted biometric authentication information and transaction information (step S244). The main controller 51 transmits to the CA server 3 the calculated message digest and a request to acquire a time stamp (step S245). The CA server 3 acquires an accurate generation time of the second digital envelope from a server (not illustrated) of a time delivery company. The CA server 3 digitally signs the acquired accurate generation time and the message digest with a private key thereof. The CA server 3 then transmits to the computer 2 a time stamp token including the generation time, the message digest, and the digital signature.

The main controller 51 in the computer 2 receives the time stamp token (step S 246). The main controller 51 encloses the first digital envelope, the encrypted biometric authentication information and the encrypted transaction information, the time stamp token, and the digital signature obtained in step S238 of Fig. 15C into a digital envelope to generate the second digital envelope (step S247). The main controller 51 transmits the second digital envelope to the Web server 1 via the input and output unit 514 and the communication unit 26 (step S248). The CPU 11 in the Web server 1 receives the second digital envelope via the communication unit 16 (step S249).

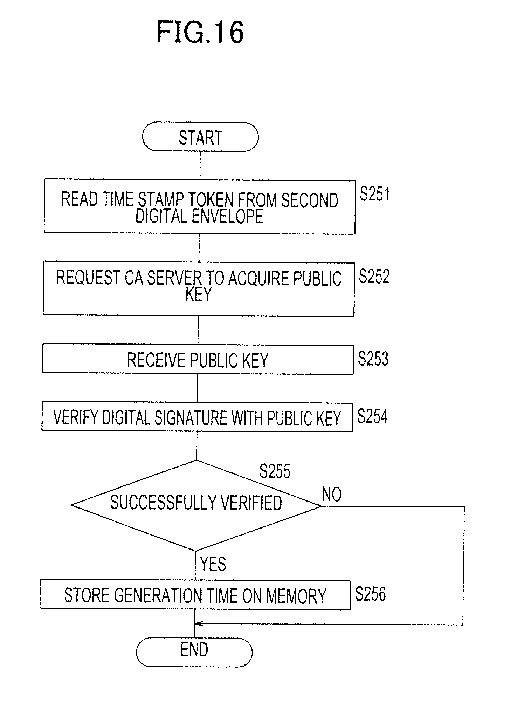

Upon receiving the second digital envelope, the Web server 1 performs the following process prior to the authentication process described with reference to the first embodiment. Fig. 16 is a flowchart illustrating the authentication process of the time stamp. The CPU 11 reads the time stamp token from the second digital envelope (step S251). The CPU 11 requests from the CA server 3 a public key corresponding to a private key held by the CA server 3 (step S252). The CPU 11 receives the public key (step S253).

In response to the public key, the CPU 11 verifies the digital signature in the time stamp token (step S254). More specifically, the CPU 11 decrypts the digital signature with the public key, and extracts the message digest. The CPU 11 calculates a message digest of the generation time within the time stamp token and the message digest (the hash values of the first digital envelope and the encrypted biometric authentication information and the encrypted transaction information). The CPU 11 determines whether the digital signature has been successfully verified, by determining whether the calculated message digest matches the message digest obtained from the public key (step S255).

If it is determined that the verification has failed (no in step S255), the CPU 11 determines that the time stamp is falsified to some degree, or that the authentication process of the time stamp has not been performed within a predetermined period of time, and then ends the process. If the verification has been successfully completed (yes in step S255), the CPU 11 stores the generation time in the time stamp token onto the storage 15 (step S256). The subsequent process steps here are identical to step S171 of the first embodiment and the process steps subsequent thereto, and the discussion thereof is omitted here. In this way, time and date data is accurately determined in transactions such as dealings on the stock exchange, typically requiring an accurate time or transactions of high-priced commercial products. The reliability of the transaction is thus increased. Moreover, three authentications of the user's will on the transaction, the biometric entity, and the device and software are integrally managed through the digital envelope management and the time management. The authentication level of each device connected to all types of networks including the Internet and a cellular phone network is heightened.

The second embodiment has been described. The rest of the second embodiment is identical in structure and operation to the first embodiment. Like elements are designated with like reference numerals and the discussion thereof is omitted here.

### Third Embodiment

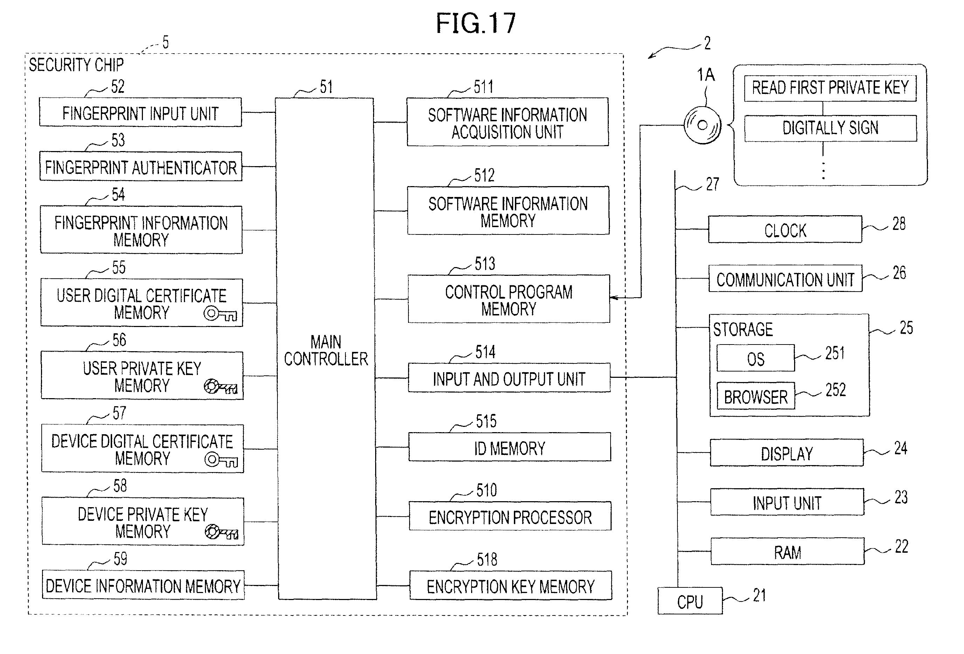

Fig. 17 illustrates hardware elements of the computer 2 in accordance with a third embodiment. A program for operating the computer 2 of the third embodiment and the CA server 3 may be supplied in a movable recording medium 1A such as CD-ROM in accordance with the third embodiment. The program may be downloaded from another server computer (not illustrated) via a communication network N. Such a downloading operation is described below.

The movable recording medium 1A recording thereon a program for causing the computer 2 illustrated in Fig. 17 to read a first private key and to perform a digital signing process is loaded on a recording medium reading device (not illustrated) of the computer 2. The program is then installed onto the control program memory 513. Alternatively, the program may be downloaded from another outside server computer (not illustrated) via the communication unit 26. In response to an instruction from the main controller 51, the program is installed onto the control program memory 513. In this way, the computer 2 and the security chip 5 function as previously described.

The third embodiment has been described. The rest of the third embodiment is identical in structure and operation to the first and second embodiments. Like elements are designated with like reference numerals and the discussion thereof is omitted here.

### Fourth Embodiment

In accordance with the first embodiment, the computer 2 includes the security chip 5. The various embodiments are not limited to such an arrangement. In one option, the process of the main controller 51 of the security chip 5 may be executed by the CPU 21 of the computer 2 without the security chip 5. In another option, part of the function of the security chip 5 may be executed by the main controller 51 of the security chip 5, and part of the function of the security chip 5 may be executed by the CPU 11.

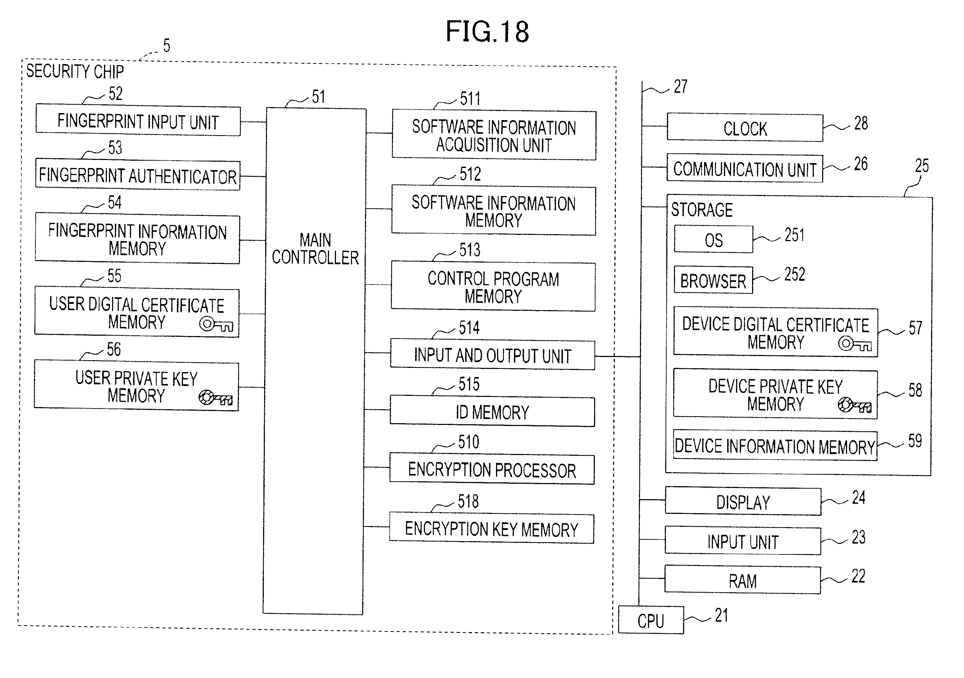

Fig. 18 illustrates hardware elements of the computer 2 in accordance with a fourth embodiment. The difference between the first embodiment and the fourth embodiment is that the device digital certificate memory 57, the device private key memory 58, and the device information memory 59, stored on the security chip 5 in the first embodiment, are stored on the storage 25 and executed by the CPU 21 in the fourth embodiment. The storage content on the device information memory 59 such as a hard disk is likely to be easily updated. The security level is thus lower than when all the authentications are performed by the security chip 5. In accordance with the fourth embodiment, the digital signing process is performed by the CPU 21 with the device private key stored on the storage 25 rather than by the main controller 51 of the security chip 5.

In accordance with the first embodiment, a fingerprint is used in the biometric authentication. The biometric authentication performed by the computer 2 includes the face authentication, the fingerprint authentication, the palm vein authentication, and a combination thereof. The security level changes depending on the type of biometric authentication. The computers 2 are different in terms of the security level of a biometric entity (hereinafter referred to as a biometric level), the security level of a device (hereinafter referred to as a device level), and the security level of a software program (hereinafter referred to as a software level). In accordance with the fourth embodiment, the Web server 1 performs the authentication process taking into consideration the three security levels.

In accordance with the fourth embodiment, the biometric authentication information read in step S152 of Fig. 12D includes a type of a biometric authentication process (hereinafter referred to as a biometric entity type). Described below as the biometric entity types are the face authentication, the fingerprint authentication, the palm vein authentication, and a combination of the finger authentication and the palm vein authentication. The device information read in step S144 of Fig. 12C includes a type of security of a device (hereinafter referred to as a device type). The following discussion focuses on first and second device types. The first device type is the CPU 21 performing the digital signing process with the device private key," and the second device type is "the security chip 5 performing the digital signing process with the device private key." More specifically, the first device type is related to the computer 2 of the fourth embodiment having a low security level, and the second device type is related to the computer 2 of the first embodiment having a high security level.

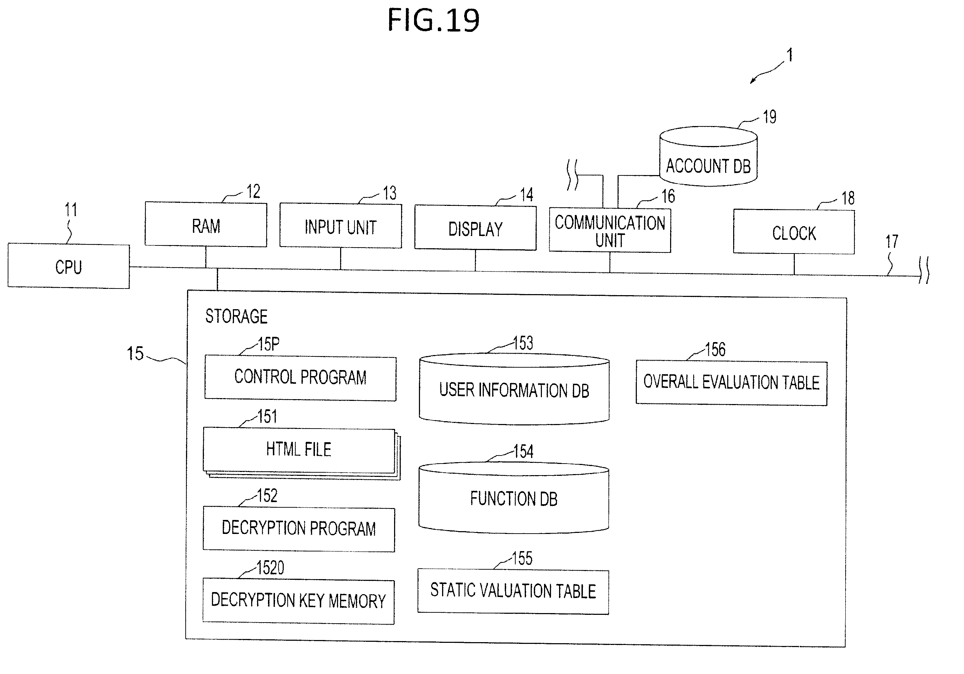

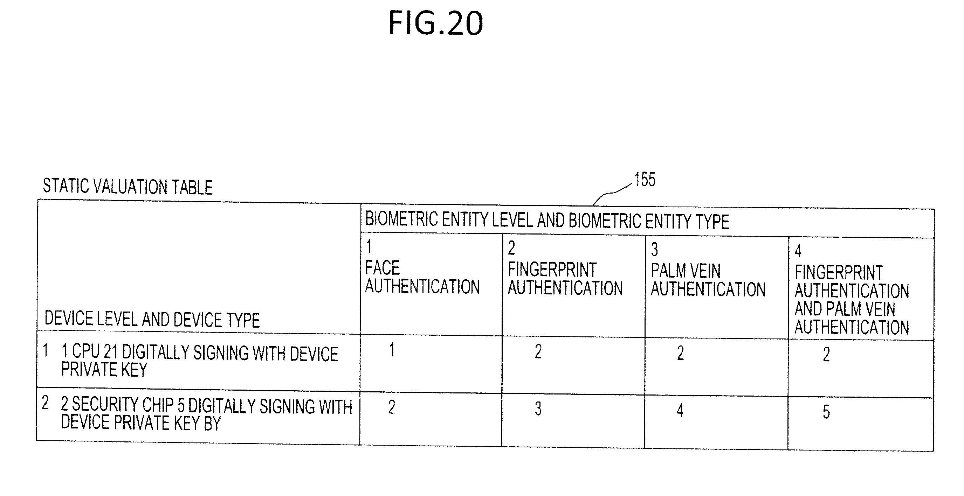

Fig. 19 is a block diagram of hardware elements of the Web server 1 in accordance with the fourth embodiment. The storage 15 further includes a static evaluation table 155 and an overall evaluation table 156. Fig. 20 illustrates the static evaluation table 155. The static evaluation table 155 stores static levels on the basis of the biometric authentication information and the device information, the security levels of which remain unchanged in principle subsequent to the purchase of the computer 2. Listed on the top row labeled "device level and device type" are biometric entity levels as security levels of biometric entity types. The higher the biometric entity level value, the higher the security level. A user having passed the face authentication is rated for a biometric entity level of 1, a user having passed the fingerprint authentication is rated for a biometric entity level of 2, a user having passed the palm vein authentication is rated for a biometric entity level of 3, and a user having passed the combination of the fingerprint authentication and the palm vein authentication is rated for the highest biometric entity level of 4.

Listed on the leftmost column are a device level and a device type. The higher the device level, the higher the security level.

The device type (device level) is rated for a level on a per biometric entity type basis (on a per biometric entity level). The static levels depending on the biometric entity level and the device level are arranged in a matrix configuration. For example, with the CPU 21 performing the face authentication in the row of "the CPU 21 digital signing with the device private key," a device level of 1 is provided at the face authentication column. With the security chip 5 performing the face authentication in the row of "the security chip 5 digitally signing with the device private key," a device level of 2 is provided at the face authentication column. The higher the static level, the higher the security level.

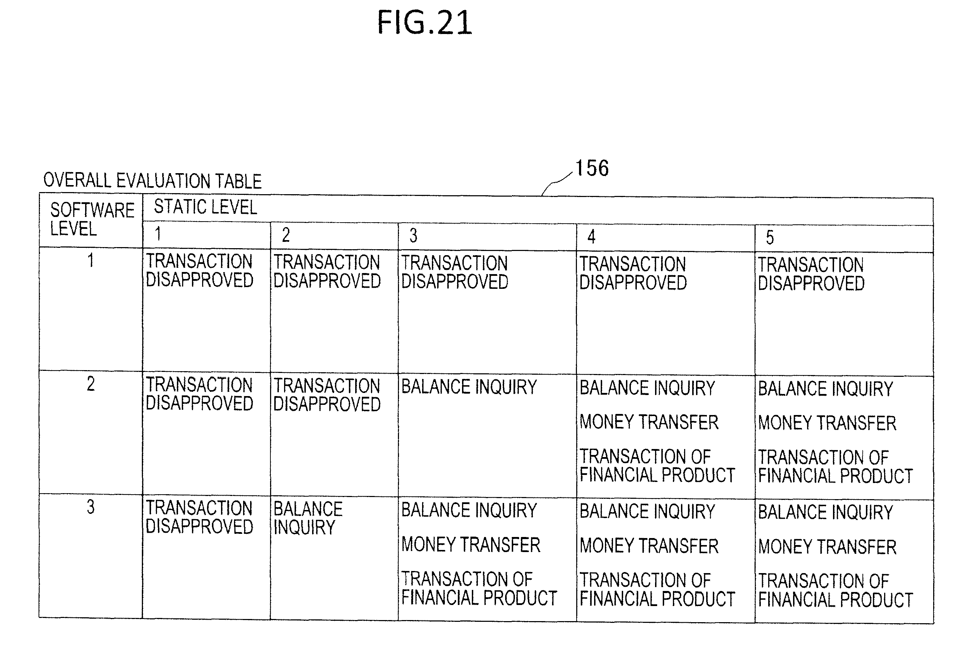

The CPU 11 receives the biometric authentication information and the device information from the computer 2, and reads the biometric entity type from the biometric authentication information and the device type from the device information. The CPU 11 reads the static level responsive to the biometric entity type and the device type from the static evaluation table 155. Fig. 21 illustrates a record layout of the overall evaluation table 156. The overall evaluation table 156 stores services to be approved on the basis of the static level and the software level. The horizontal axis of the overall evaluation table 156 represents the static level, and the vertical axis of the overall evaluation table 156 represents the software level. For convenience of explanation, the software levels are rated on a scale of 3, and the higher the level value, the higher the security level.

If both the static level and the software level are low, the transaction is disapproved. If the overall security level is low even with no falsification detected, the CPU 11 in the Web server 1 transmits information of transaction disapproved to the computer 2. If the static level and the software level are high to some degree, only balance inquiry is stored. The CPU 11 transmits to the computer 2 information indicating transaction approved only for balance inquiry if the transaction information is balance inquiry. If both the static level and the software level are sufficiently high, three operations, i.e., balance inquiry, money transfer, and transaction of financial product are stored. If the transaction information is one of the balance inquiry, the money transfer, and the transaction of financial product, the CPU 11 transmits to the computer 2 information indicating transaction approved.

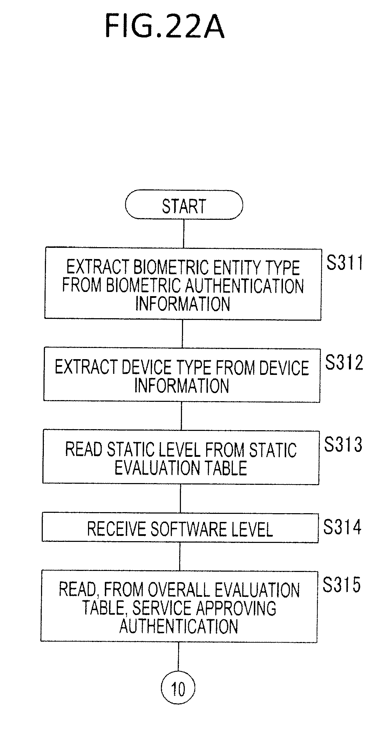

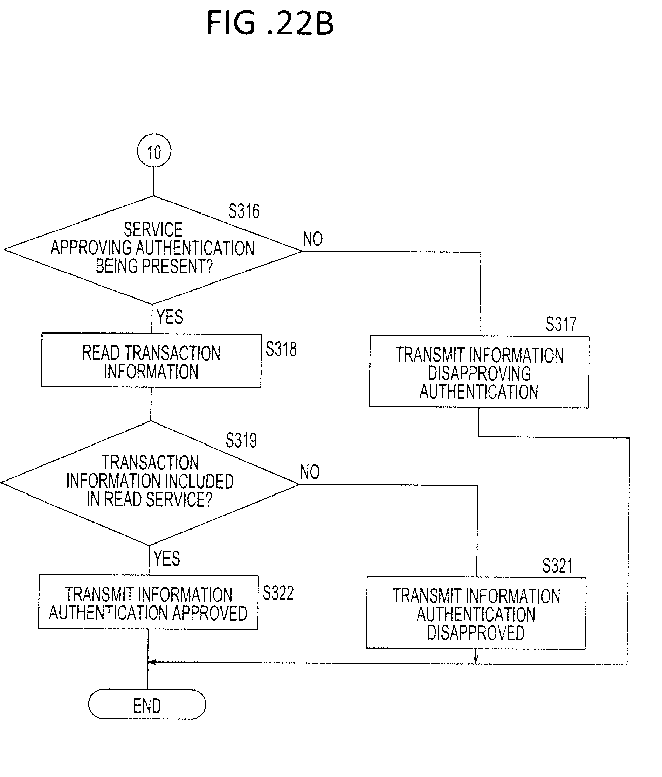

Figs. 22A and 22B are a flowchart of a final authentication process. The CPU 11 extracts the biometric entity type from the biometric authentication information decrypted in step S175 of Fig. 14A (step S311). The CPU 11 extracts the device type from the device information decrypted in step 5182 of Fig. 14B (step S312). In accordance with the fourth embodiment, the biometric authentication information includes the biometric entity type and the device information includes the device type on the computer 2. The present invention is not limited to this arrangement. For example, the biometric entity type and the device type may be acquired from the manufacturer name and the model name of the computer 2 in the device information. In this case, one of the Web server 1 and the DB server 4 may store the biometric entity type and the device type with the manufacturer name and the model name mapped thereto, and then extracts the biometric entity type and the device type. For example, the model name "FM100" of the manufacturer name "company F" is mapped to information "the palm vein authentication" as the biometric entity type, and "the security chip 5 digitally signing with the device private key" as the device type. In this case, the static level is 4.

The CPU 11 reads the static level from the static evaluation table 155 in response to the read biometric entity type and device type (step S313). The CPU 11 receives the software level from the DB server 4 as described in step S191 of Fig. 14C (step S314). The CPU 11 reads an approved service from the overall evaluation table 156 in response to the static level and the software level (step S315). The CPU 11 determines whether a service, the authentication of which is to be approved, is present (step S316).

If no service with the authentication thereof approved is present (no in step S216), i.e., transaction is disapproved in the overall evaluation table 156, the CPU 11 transmits to the computer 2 the information of the transaction disapproved (step S317). If it is determined that a service with the authentication thereof approved is present (yes in step S316), the CPU 11 reads the transaction information decrypted in step S175 of Fig. 14A (step S318). The CPU 11 determines whether the transaction information is included in the service read in step S315 (step S319). If it is determined that the transaction information is not contained in the service read in step S315 (no in step S319), the CPU 11 transmits to the computer 2 the information of authentication disapproved (step S321).

If the transaction information is contained in the service read in step S315 (yes in step S319), the CPU 11 transmits to the computer 2 the information of authentication approved (step S322). The subsequent process steps are identical to step S194 of Fig. 14D and the process steps subsequent thereto, and the detailed discussion thereof is omitted here. The securities of the biometric entity, the device, and the software are thus generally evaluated, and a differential service is thus supplied to a client meeting the security policy. The security policy may be flexibly adjusted in response to a service content of a service provider. A flexible authentication process is thus carried out with falsification controlled.

The fourth embodiment has been described. The rest of the fourth embodiment is identical in structure and operation to the first through third embodiments. Like elements are designated with like reference numerals and the discussion thereof is omitted here.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on computer-readable media comprising computer-readable recording media. The program/software implementing the embodiments may also be transmitted over transmission communication media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. An example of communication media includes a carrier-wave signal.

Further, according to an aspect of the embodiments, any combinations of the described features, functions and/or operations can be provided.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

## Claims

1. An information processing apparatus, comprising:
a first signing unit configured to digitally sign, with a first private key, device information including identification information of the information processing apparatus and environment information related to a use environment of the information processing apparatus;
a first generator configured to generate a first digital envelope as data including the digitally signed device information and the digitally signed environment information;
a second signing unit configured to digitally sign, with a second private key, biometric authentication information related to biometric authentication, and the first digital envelope;
a second generator configured to generate a second digital envelope as data including the digitally signed biometric authentication information and the digitally signed first digital envelope;
a transmitter configured to transmit the second digital envelope generated by the second generator to another apparatus; and
a receiver configured to receive authentication results responsive to the transmitted second digital envelope.

2. The information processing apparatus according to claim 1, wherein the environment information comprises information related to a software program executed by the information processing apparatus.

3. The information processing apparatus according to claim 1, further comprising an input unit configured to receive transaction information related to a transaction,
wherein the second signing unit digitally signs the transaction information received by the input unit, the biometric authentication information, and the first digital envelope,
wherein the second generator generates the second digital envelope as data including the digitally signed transaction information, the digitally signed biometric authentication information, and the digitally signed first digital envelope, and
wherein the receiver receives information related to the transaction information.

4. The information processing apparatus according to claim 3, further comprising an encrypting unit configured to encrypt the device information and the environment information,
wherein the first signing unit digitally signs the encrypted device information and the encrypted environment information.

5. The information processing apparatus according to claim 4, further comprising a second encrypting unit configured to encrypt the biometric authentication information and the transaction information with a second encryption key,
wherein the second signing unit digitally signs the encrypted biometric authentication information and the encrypted transaction information, and the first digital envelope.

6. The information processing apparatus according to claim 5, wherein the biometric authentication information comprises identification information identifying an authentication subject, and information related to results of biometric authentication.

7. The information processing apparatus according to claim 5, wherein the biometric authentication information comprises identification information identifying an authentication subject, information related to a type of a biometric authentication process, and results of biometric authentication.

8. The information processing apparatus according to claim 5, wherein the information processing apparatus is connected to a security apparatus,
wherein the second signing unit is included in the security apparatus, the security apparatus including a biometric information memory configured to store biometric information of an authentication subject and a determining unit configured to determine whether biometric information received from the another apparatus matches the biometric information stored on the biometric information memory, and
wherein the second signing unit digitally signs the encrypted biometric authentication information, the encrypted transaction information, and the first digital envelope, when the determining unit determines that the biometric information received from the another apparatus matches the biometric information stored on the biometric information memory.

9. The information processing apparatus according to claim 5, further comprising:
a clock outputting time;
a first acquisition unit configured to acquires from the clock a time of the biometric authentication;
a second acquisition unit configured to acquire from the clock a time of reading of the device information;
a third acquisition unit configured to acquire from the clock a time of reading of the environment information;
a fourth acquisition unit configured to acquire from the clock a time of reception of the transaction information;
a time determining unit configured to determine whether the times acquired by the first through fourth acquisition units falls within a predetermined time band;
an acquisition request unit configured to transmit to another apparatus an acquisition request to acquire time stamps for the encrypted biometric authentication information, the encrypted transaction information, and the first digital envelope, when the time determining unit determines that the times fall within the predetermined time band; and
a token receiver configured to receive a time stamp token related to the time stamp transmitted from the another apparatus,
wherein the second generator generates the second digital envelope that includes the first digital envelop digitally signed by the second signing unit, the encrypted biometric authentication information digitally signed by the second signing unit, the encrypted transaction information digitally signed by the second signing unit, and the time stamp token received by the token receiver.

10. An authentication device for authenticating an information processing apparatus, comprising:
an authentication memory configured to store information related to authentication;
an envelope receiver configured to receive from the information processing apparatus a second digital envelope, the second digital envelope including first data and second data, the first data being obtained by digitally signing with a second private key a first digital envelope, the first digital envelope including device information digitally signed with a first private key, and environment information digitally signed with the first private key, and the second data being obtained by digitally signing biometric authentication information with the second private key;
a first verifying unit configured to verify, with a second public key corresponding to the second private key, the digital signature of the biometric authentication information and the first digital envelope by the second private key, within the second digital envelope received by the envelope receiver;
a biometric determining unit configured to determine whether information related to the authentication corresponding to the biometric authentication information received by the envelope receiver is stored on the authentication memory when the first verifying unit has successfully verified the digital signature;
a second verifying unit configured to verify, with a first public key corresponding to the first private key, the digital signature of the device information and the environment information by the first private key within the first digital envelope when the biometric determining unit determines that the information is stored; and
an authentication unit configured to perform an authentication operation based on the verification results.

11. The authentication device according to claim 10, further comprising a device determining unit configured to determine whether information related to the authentication corresponding to the device information is stored on the authentication memory when the second verifying unit has successfully verified the digital signature,
wherein the authentication unit performs an authentication failure operation when the device determining unit has determined that the information related to the authentication corresponding to the device information is not stored.

12. The authentication device according to claim 11, further comprising:
an environment information transmitter configured to transmit the environment information to another apparatus when the device determining unit has determined that the information related to the authentication corresponding to the device information is stored;
a receiver configured to receive information related to a level of security of the environment information transmitted by the environment information transmitter; and
a transmitter configured to transmit, to the information processing apparatus, information indicating an authentication permission responsive to the received level by the receiver.

13. A computer readable recording medium storing a program to be executed by an information processing apparatus, the program causing the information processing apparatus to execute a process comprising:
digitally signing, with a first private key, device information including identification information of the information processing apparatus and environment information related to a use environment of the information processing apparatus;
generating a first digital envelope as data including the digitally signed device information and the digitally signed environment information;
digitally signing, with a second private key, biometric authentication information related to biometric authentication and the first digital envelope;
generating a second digital envelope as data including the digitally signed biometric authentication information and the digitally signed first digital envelope;
transmitting the generated second digital envelope to another apparatus; and
receiving authentication results responsive to the transmitted second digital envelope.
